# EUROPÄISCHE PATENTSCHRIFT

(11) **EP 0 439 718 B1**
(45) Veröffentlichungstag und Bekanntmachung des Hinweises auf die Patenterteilung: **01.03.1995**
(21) Anmeldenummer: 90123029.2
(22) Anmeldetag: 01.12.1990
(51) Int. Cl.: A01C 17/00, A01C 15/00

(54) **Schleuderdüngerstreuer**
Broadcaster
Epandeur centrifuge

(30) Priorität: 27.01.1990 DE 4002408
(43) Veröffentlichungstag der Anmeldung: 07.08.1991
(73) Patentinhaber: Amazonen-Werke H. Dreyer GmbH & Co. KG, D-49205 Hasbergen (DE)
(72) Erfinder: Dreyer, Heinz, Dipl.-Ing. Dr., W-4507 Hasbergen (DE)

(56) Entgegenhaltungen:
- EP-A- 0 073 544
- EP-A- 0 078 585
- DE-A- 2 804 253
- DE-U- 8 632 954
- FR-A- 1 148 263
- FR-A- 2 617 000

## Beschreibung

Die Erfindung betrifft einen Schleuderdüngerstreuer gemäß des Oberbegriffes des Patentanspruches 1.

Ein derartiger Schleuderdüngerstreuer ist in der EP 0078585 beschrieben. Der Vorratsbehälter dieses Streuers ist durch ein dachförmiges Mittelteil in zwei Trichterspitzen aufgeteilt. Unterhalb jeder Trichterspitze ist jeweils eine rotierend angetriebene Schleuderscheibe mit darauf angeordneten Wurfschaufeln angeordnet. Die Schleuderscheiben werden ineinander entgegengesetzten Drehsinn zueinander angetrieben. Die Schleuderscheiben sind jeweils auf Schleuderscheibenantriebswellen, die aus einem Getriebegehäuse herausragen, drehfest angeordnet. Die Schleuderscheibenantriebswelle ist jeweils durch den Behälterboden hindurch verlängert. Auf ihrer Oberseite trägt jede Schleuderscheibenantriebswelle, deren Bereich sich im Vorratsbehälter befindet, sog. Dosier- und Ausbringorgane, die eine rührwerkähnliche Wirkung haben, und das sich im Vorratsbehälter befindliche Düngemittel den sich im Boden und in den schrägen Vorratsbehältern befindlichen Austrittsöffnungen zuführen, welche über davor angeordneten Schieber zu schließen und zu öffnen sowie in unterschiedlichen Öffnungsweiten einzustellen sind. Die Dosier- und Ausbringorgane, werden, da sie unmittelbar mit der Schleuderscheibenantriebswelle drehfest verbunden sind, mit der gleichen Drehzahl wie die Schleuderscheibe direkt angetrieben. Die Dosier- und Ausbringorgane bestehen aus rotationssymmetrischen Ausbringkörpern. An diesen rotationssymmetrischen Ausbringkörpern sind die die Auslauföffnung überstreichende Rührfinger angeordnet. Die Oberseite der rotationssymmetrischen Ausbringkörper ist mit einer sehr flachen Wölbung versehen.

Ein weiterer Schleuderdüngerstreuer ist in der Praxis bekannt geworden und wird beispielsweise in dem deutschen Gebrauchsmuster 77 39 597 sowie in der DE-AS 14 57 773 beschrieben. Dieser Schleuderdüngerstreuer weist einen Vorratsbehälter auf, der in seinem unteren Bereich durch ein dachförmiges Mittelteil in zwei Trichterspitzen aufgeteilt ist. Unterhalb dieser beiden Trichterspitzen ist jeweils eine rotierend angetriebene Schleuderscheibe mit darauf angeordneten Wurfschaufeln unterschiedlicher Länge angeordnet. Die Schleuderscheiben werden in einander gegengesetzten Drehsinn zueinander angetrieben. Die Schleuderscheiben sind jeweils auf Schleuderscheibenantriebswellen, die aus einem Getriebegehäuse herausragen, drehfest angeordnet. Die Schleuderscheibenantriebswelle ist jeweils durch den Behälterboden hindurch verlängert. An ihrer Oberseite trägt die Schleuderscheibenantriebswelle, deren Bereich sich im Vorratsbehälter befindet, sogenannte Dosier- und Ausbringorgane, die eine rührwerkähnliche Wirkung haben und das sich im Vorratsbehälter befindliche Düngermittel den sich in den schrägen Vorratsbehälterwänden befindlichen Austrittsöffnungen zuführen, welche über davor angeordnete Schieber zu schließen und zu öffnen sowie in unterschiedliche Öffnungsweiten einzustellen sind. Die Dosier- und Ausbringorgane werden, da sie unmittelbar mit der Schleuderscheibenantriebswelle drehfest verbunden sind, mit der gleichen Drehzahl wie die Schleuderscheiben direkt angetrieben. Die den Schleuderscheiben zugeordneten Austrittsöffnungen können unabhängig voneinander geöffnet und geschlossen werden. Hierdurch ist es beispielsweise möglich, die eine Austrittsöffnung zu schließen, so daß der einen Schleuderscheibe kein Düngemittel zugeführt wird, während die andere Austrittsöffnung in gewünschter Weise geöffnet wird, so daß in dosierter Menge das jeweilige Düngermittel dann nur dieser einen Schleuderscheibe zugeführt werden kann. Somit kann beispielsweise einseitig gestreut werden, was beispielsweise bei speziellen Grenzstreuverfahren erforderlich ist.

Es hat sich nun in der Paxsis gezeigt, daß die teilweise relativ agressiv arbeitenden Dosier- und Ausbringorgane wie in sie in der Paxsis bekannt sind, beim Grenzstreuen, wenn nur der einen Schleuderscheibe Düngemittel zugeführt wird, und somit nur die eine Austrittsöffnung geöffnet und die andere, die der anderen Schleuderscheibe an sich das Düngemittel zuführende Austrittsöffnung geschlossen ist, der Dünger zerdrückt und zusammenbackt, so daß die Austrittsöffnung durch einen davor sich aufbauenden Wall aus verfestigtem und zusammengebackten Düngemitteln in ungünstigen Fällen verschlossen wird.

Der Erfindung liegt die Aufgabe zugrunde, mit geringst möglichen konstruktivem Aufwand für einen preiswerten Schleuderdüngerstreuer ein Rühr- und Dosiervorrichtung zu schaffen, die eine Rührwirkung aufweist, die dennoch so granulatschonend ist, daß bei längerem einseitig geschlossenen Austrittsorganen, d.h. bei verringerter Streubreite (beispielsweise halbseitiger Streuung) ein Verstopfen der Austrittsöffnung vermieden wird.

Diese Aufgabe wird erfindungsgemäß durch die kennzeichnenden Maßnahmen des Patentanspruches 1 gelöst. Infolge dieser Maßnahmen wird zunächst die wirksame Umfangsgeschwindigkeit in einem Bereich gehalten, in dem eine granulatschonende Dosier- und Ausbringwirkung des Ausbringkörpers erreicht wird. Der Düngerstrom gelangt von oben auf das rotierende Ausbringorgan und wird aufgeteilt und in Richtung der Austrittsöffnung schonend bewegt. Hierdurch ist es ohne weiters möglich, einseitig zu streuen, ohne daß die Gefahr besteht, daß eine Ausbringöffnung verstopft, wenn diese verschlossen ist. Es wird also gewährleistet, mit einem Schleuderdüngerstreuer mit mindestens zwei Streuscheiben auch längere Strecken, d.h. mehrere Kilometer einseitig (beispielsweise halbe Arbeitsbreite, Grenzstreuen mit halber Arbeitsbreite) streuen zu können, ohne daß das Dosier- und Ausbringorgan gegenüber der Scheibendrehzahl untersetzt, d.h. mit geringerer Drehzahl, angetrieben werden muß. Bislang wurde dieses Ziel parktisch nur durch eine wesentliche Drehzahlreduzierung erreicht, wie dieses beispielsweise durch die DE-AS 28 35 011 und DE-OS 28 04 253 bekannt ist. Dieses Verfahren, über eine Drehzahlreduzierung des Rührorganes bzw. des Dosier- und Ausbringelementes eine schonende Rührwirkung zu erzielen ist sehr gut, aber es bedeutet auch eine erhebliche Verteuerung dieser Schleuderdüngerstreuer, so daß sich bisher dieses nur bei relativ teuren und aufwendigen Maschinen mit großer Arbeitsbreite verwirklichen ließ.

Es ist also jetzt möglich, einseitig, z.B. mit Stickstoff und Phosphatdünger etwa 30 Minuten lang streuen zu können, wobei nach dieser Zeit der Dünger dann noch einwandfrei durch die Austrittsöffnungen von dem jeweiligen Dosier- und Ausbringorgan auch durch die bis dahin durch einen Schieber geschlossenen Austrittsöffnung auf die Schleuderscheibe gefördert wird. Bei beispielsweise 8 km/h Fahrgeschwindigkeit, wird somit eine Fahrstrecke von 4 km erreicht, man also kann beispielsweise ein Feld von 1 km x 1 km Seitenlänge damit einseitig streuend umfahren. Dieses Feld wäre also beispielsweise 100 ha groß. Die in Europa vorhandenen Feldgrößen sind praktisch ohne Ausnahmen eher deutlich kleiner (2 - 8 ha im Durchschnitt). Eine derartige Zeit von 30 Minuten für das halbseitige oder einseitige Streuen ist also völlig ausreichend. Somit wird also durch die erfindungsgemäßen Maßnahmen erreicht, daß mit geringsten konstruktiven Aufwand ein granulatschonendes Dosier- und Ausbringorgan geschaffen wird, welches auch das einseitige Streuen, d.h. die Rotation des Dosierorgans bei geschlossener Austrittsöffnung über eine relativ lange Zeit erlaubt, ohne daß in der Praxis die Austrittsöffnungen verstopft wird. Damit gewährleistet ist, daß sich evtl. sich im Dünger befindliche Kluten das Ausbringen des Düngers nicht verschlechtern sowie ein Verstopfen der Austrittsöffnungen sicher vermeiden wird, ist vorgesehen, daß der jeweilige Zubringerkörper in der Nähe seinen größten Durchmessers von zumindest einem Auswerferelement überragt wird, und daß der Auswerfer den Zubringer bezüglich seines größten Durchmessers nicht mehr als um 15 mm überragt. Hierdurch werden die Dosier- und Ausbringorgane so ausgestaltet, daß sie neben der granulatschonenden Wirkung dennoch in der Lage sind, Kluten zu zerschlagen, ohne daß der Dünger in Granulatform an sich zermahlen oder zerdrückt wird. Somit werden Ausbring- und Dosierorgane geschaffen, die außerdem, trotz ihrer granulatschonende Bauweise noch kleinere Kluten, welche sich in den Öffnungen festsetzen könnten, zerschlagen oder zerquetschen, wodurch die Funktionssicherheit des Schleuderdüngerstreuers in jedem Falle erhalten bleibt. Um weiterhin sowohl eine granulatschonende Arbeitsweise zu gewährleisten und gleichzeitig ein Verstopfen der Austrittsöffnungen zu vermeiden, ist vorgesehen, daß zwischen der größten radialen Ausdehnung des Zubringerkörpers und der Vorratsbehälterwand, in welcher sich die Austrittsöffnungen befinden, ein Abstand von nicht mehr als 40 mm vorhanden ist.

Um eine gleichmäßige Zuführung des Düngers zu der in der Seitenwand sich befindlichen Auslauföffnung auch unter schwierigen Bedingungen zugewährleisten, ist der Ausbringkörper auf seiner Unterseite mit einem Auswerferelement versehen. Durch dieses Auswerferelement wird eine gute Entleerung des Vorratsbehälter sichergestellt sowie gleichzeitig ein Zerschlagen von sich im Dünger befindlichen Kluten erreicht.

Eine äußerst granulatschonende Arbeit des Zubringerkörpers wird dadurch erreicht, daR der jeweilige Zubringerkörper eine zumindest etwa völlig glatte oder mit sehr kleinen Erhebungen versehene Oberfläche aufweist.

Für das Ausbringen von problematischen Düngersorten, welche sehr schnell zu einem Zusammenbacken neigen, ist es von entscheidender Bedeutung, daß der Zubringkörper eine glatte Oberfläche aufweist.

Es hat sich bei Versuchen in überraschender Weise gezeigt, daß am universellsten bei verschiedenen Düngersorten zur Erzielung eines guten und gleichmäßigen Streubildes es vorteilhaft ist, daß das Längenmaß des Auswerferlementes in etwa den größten Durchmesser des Ausbringkörpers entspricht.

Eine äußerst granulatschonende Arbeitsweise des Zubringerkörpers wird dadurch erreicht, daß der Zubringerkörper eine kegelige oder kegelstumpförmige Form aufweist, dessen Spitze nach oben gerichtet ist. Hierdurch wird der Düngerstrom weiter aufgeteilt und weich, (d.h. im Sinne von granulatschonend) in Richtung der Austrittsöffnungen nach außen gefördert. Vorzugsweise schließen die Außenflächen des kegeligen Ausbringerkörpers einen sich nach unten öffnenden Winkel, der etwa 60 -120°, vorzugsweise 90°, entspricht, ein. Um sicherzustellen, daß der Zubringerkörper auch in seinem unteren Bereich, d.h. zwischen seiner Unterseite und dem Behälterboden kein Dünger nachteilig zerdrückt wird und sich nachteilig festsetzt, ist erfindungsgemäß vorgesehen, daß ein erheblicher senkrechter Abstand zwischen dem Zubringerkörper in seiner größten radialen Ausdehnung und dem Behälterboden vorhanden ist, wobei dieser Abstand mindestens 8 mm, vorzugsweise mehr als 10 mm beträgt. Hierdurch liegt dieser Abstand in einer Größenordnung, der sich oberhalb des normalen Korngrößenspektrums der auszubringenden Düngemittel in Granulatform liegt.

Zwischen der größten radialen Ausdehnung des Auswerfers und der Vorratsbehälterwand, in welcher sich die Austrittsöffnungen befinden, sollte jedoch ein Abstand von mehr als 25 mm vorhanden sein. Hierdurch wird folgendes erreicht: Bei kleineren Düngergaben, vor allem bei Dünger mit hohem N-Gehalt ist der Durchmesser des Querschnittes der geöffneten Austrittsöffnungen etwa 10 - 3o mm bei den verwendeten Schleuderstreuern. Es werden also Düngerklumpen gerade dieser Größe, die also in den genannten Öffnungen mit dem angesprochenen Querschnitt stecken bleiben könnten, zerdrückt, zerquescht, bzw. durch diese Öffnungen gepreßt oder geschleudert. Der Abstand zwischen dem größten Durchmessers des Zubringerkörpers bzw. des Auswerfers einerseits und den aufrechten Austrittsöffnungen andererseits beträgt also unter 30 mm. Hierbei ist vorteilhaft, wenn dieser Abstand zu den übrigen Wandteilen des Vorratsbehälters im unteren Bereich größer ist. Hierdurch wird gewährleistet, daß beispielsweise die Farbe nicht abgerieben wird, daß der Verschleiß wesentlich geringer ist, daß die Temperaturbildung, d.h. die Erhitzung des Düngers durch evtl. Reibung aufgrund der erfingungsgemäßen Ausbildung des Zubringers des Auswerfers sehr klein gehalten wird, da die Umfangs- und Relativgeschwindigkeiten zu der Vorratsbehälterwand gering gehalten wird.

Um eine Zerstörung von Maschinenteilen, wenn beispielsweise ein unzerdrückbarer Gegenstand zwischen dem Auswerfer den Vorratsbehälterwand oder den Austrittsöffnungen gelangt, ist es erfindungsgemäß vorgesehen, daß der Auswerfer mittels einer Überlastsicherung auf der Antriebswelle befestigt ist.

Der Auswerfer ist unterhalb des Zubringerkörpers angeordnet, so daß zunächst der Dünger von dem Zubringerkörper aufgeteilt schonend beschleunigt und dann von dem Auswerfer der jeweiligen Austrittsöffnung zugeführt wird. Eine einfache Ausführung der Überlastsicherung läßt sich beispielsweise auch dadurch erreichen, daß der Auswerfer elastisch nach oben und oder entgegen der Drehrichtung ausweichbar auf der Antriebswelle angeordnet ist.

Um eine relativ lange Standfestigkeit des Auswerfers zu erreichen, ist erfindungsgemäß vorgesehen, daß der Auswerfer aus Stahl, vorzugsweise aus einem hochfesten und/oder nicht rostendem Stahl, vorzugsweise mit einer zusätzlichen aufpanzerung ausgestattet ist.

Um eine einfache Demontage und gute Reinigungsmöglichkeit sowie Servicefreundlichkeit zu erreichen, ist erfindungsgemäß vorgesehen, daß der Auswerfer auswechselbar auf der Antriebswelle angeordnet ist. Ebenfalls kann der Zubringerkörper auswechselbar auf der Antriebswelle angeordnet sein. Es ist ebenfalls somit möglich, verschiedene Auswerferformen und Zubringerkörperarten einzusetzen.

Je nach auszubringendem Granulat und Düngerart kann es vorteilhaft sein, daß Auswerfer einseitig oder in einem anderen Fall beidseitig den Zubringerkörper über die größte Ausdehnung des Zubringerkörpers überragen.

Eine granulatschonende, dennoch ausreichend aggressive Arbeitsweise des Auswerfers wird dadurch erreicht, daß der über den größten Bereich des Zubringerkörpers überstehende Bereich des Auswerfers schräg nach oben und/oder unten abgebogen ist.

Für besonders schwierige Einsatzfälle hat sich ein Auswerfer als vorteilhaft erwiesen, der auf jeder dem Zubringerkörper ihm überragenden Seite zwei Auswerferfinger aufweist, wobei auf jeder Seite der eine Finger nach oben und der andere Finger nach unten umgebogen ist. Hierdurch werden die Kluten von diesen beiden Fingern regelgerecht erfaßt und zertrümmert und aus der Austrittsöffnung herausgeschleudert, wobei evtl. sich kleinere in einem Zwickel der Austrittsöffnung festgesetzte Kluten mit herausgerissen werden. Die Wirkung dieser beiden geschränkten Finger ist ähnlich der Wirkung einer Kreissäge.

Insbesondere bei Schleuderdüngerstreuern, deren Schleuderscheiben in entgegengesetztem Drehsinn rotieren, hat sich als vorteilhaft erwiesen, daß die auf der längeren Seite gerade gegenüber liegenden Finger gemeinsam nach oben oder gemeinsam nach unten umgebogen sind. Hierbei sollten sämtliche Auswerfer gleich ausgebildet sein, denn hierdurch wird eine Verwechselungsgefahr bei der Montage ausgeschlossen

Besonders wenn das Längenmaß des Auswerfers dem Durchmesser des Zubringerkörper in etwa entspricht, hat sich eine vorteilhafte Ausgestaltung und Ausswurfwirkung des Auswerfers gezeigt, wenn beide Enden des Auswerfers nach unten weisen. Hiebei können in vorteilhafter Weise die äußeren Breitseiten der Auswerferfinger den Ausbringkörper etwas, beispielweise etwa 20 mm überragen.

Um die Umfangsgeschwindigkeit im Dichtspalt zwischen der Durchtrittsöffnung in der Bodenplatte und der durch diese Durchtrittsöffnung geführten Antriebswelle möglichst gering zu halten, so daß größere Reibung und daraus führende Temperaturen und somit der Verschleiß reduziert bzw. vermindert wird, ist erfindungsgemäß vorgesehen, daß die Durchtrittsöffnung, durch welche die Antriebswelle zum Antrieb des Zubringerkörpers geführt ist, einen wesentliche kleineren Durchmesser als der Zubringerkörper in seiner größten Ausdehnung aufweist.

Weiterhin ist erfindungsgemäß vorgesehen, daß vor den Austrittsöffnungen Verschlußschieber angeordnet sind, die auf ihrer den Austrittsöffnungen und den Vorratsbehälterinnenraum zugewandten Seite im Bereich der kleinsten Öffnungen ein Verdränger- und/oder Aufbrechelement aufweisen, welches sich auf Höhe des Auswerfers und/oder der größten Ausdehnung des Zubringerkörpers befindet. Durch dieses Verdränger- und/oder Aufbrechelement wird gewährleistet, falls sich bei längerem einseitigen Streuen evtl. ein weicher Düngerrand vor der Austrittsöffnung gebildet hat, dieser beim Öffnen der Austrittsöffnung durch Bewegen des Verschlußschiebers in jedem Falle aufgebrochen wird. Darüberhinaus arbeitet dieses Verdrängerelement mit dem Auswerfer zusammen, so daß durch die Zusammenarbeit des Verdränger- und/oder Aufbrechelementes und dem Auswerfer auch härteste Kluten zerdrückt werden können. Besonders vorteilhaft arbeitet das Verdränger- und/oder Aufbrechelement mit einem Auswerfer zusammen, der auf jeder Seite zwei Auswerferfinger aufweist, wobei der eine Finger nach oben und der andere unten gebogen ist und das Verdrängerelement sich dann auf der Höhe zwischen dem nach oben und und nach unten weisenden Fingern befindet.

Weiterhin hat sich für ein gleichmäßies Ausbringen des Düngers sowie für einen gleichmäßigen Ausfluß des Düngers zu den Schleuderscheiben als vorteilhaft erwiesen, daß der Zwischenraum zwischen der Wand, in welcher sich die Auslauföffnung befindet, und dem Ausbringkörper trichter- oder keilförmig ausgebildet ist.

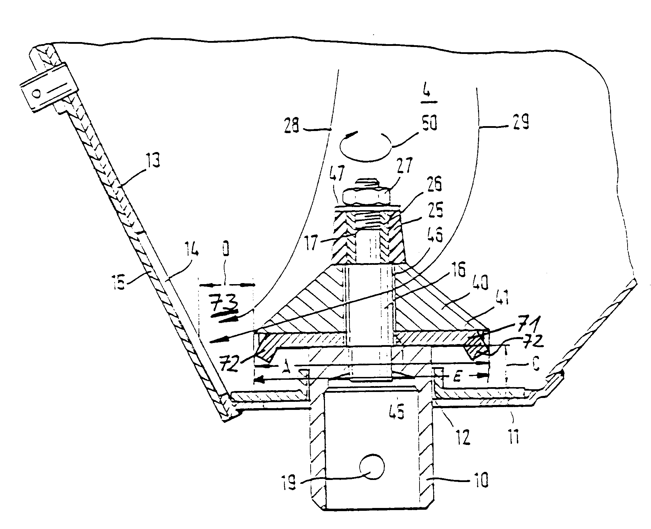

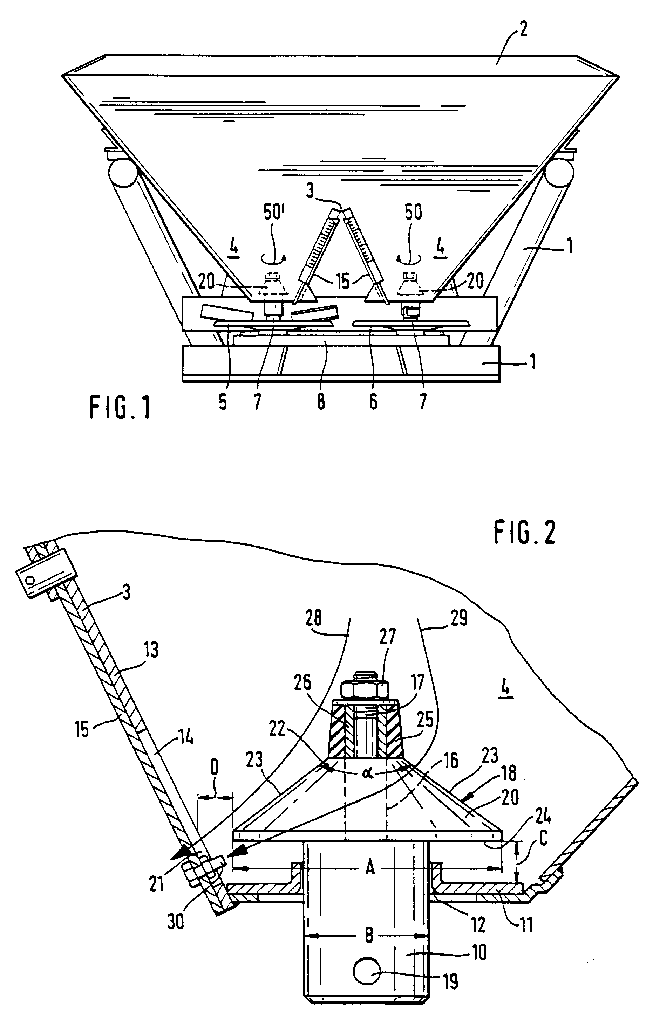

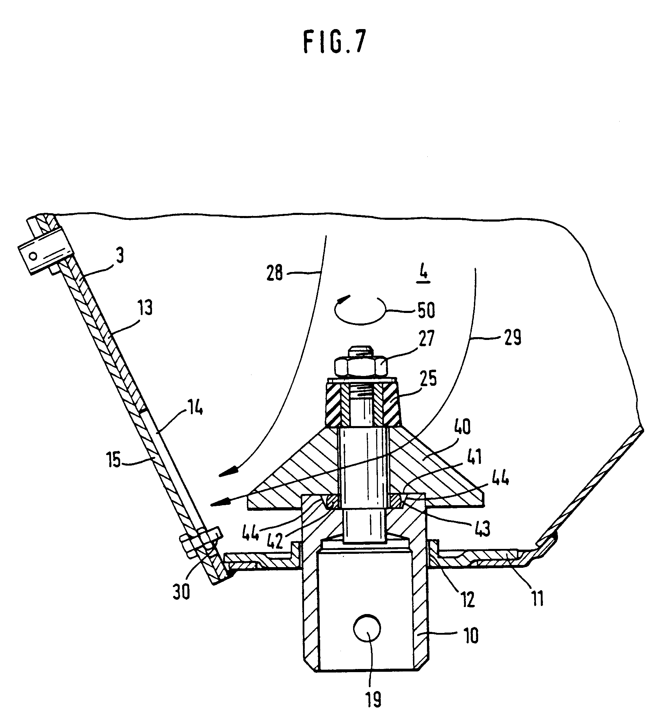

Durch die europäische Offenlegungsschrift 00 73 544 ist ein Schleuderdüngerstreuer bekannt geworden, der Ausbring- und Dosierorgane aufweist, die mit gleicher Drehzahl wie die Schleuderscheiben angetrieben werden. Diese Ausbring- und Dosierorgane sind gemäß Fig. 7 kegelig ausgebildet und und weisen nach außen verlaufende Auswerfer in ringförmiger Form auf. Dieses Ausbring- und Dosierorgan ist gleichzeitig als Behälterboden ausgebildet und erstreckt sich über den gesamten unteren Bereich des Auslaßtrichters In der Fig. 2 sind auf etwa ebenen und rotierenden Bodenplatten Erhebungen vorgesehen, die die rotierenden Bodenplatten aber nicht überragen. Düngerklumpen können nicht zerschlagen werden, wenn diese die Austrittsöffnungen verstopfen.

Gleiches gilt für den Schleuderdüngerstreuer nach der deutschen Patentschrift 34 05 245. Auch hier ist das Ausbring- und Dosierorgan gleichzeitig als Bodenplatte ausgebildet.

Weitere Einzelheiten der Erfindung sind den übrigen Unteransprüche, der Beispielsbeschreibung und den Zeichnungen zu entnehmen. Hierbei zeigen
- Fig. 1: den Schleuderdüngerstreuer in der Ansicht von hinten,
- Fig. 2: die Anordnung des Rühr- und Ausbringorgans in der rechten Trichterspitze in der Ansicht von hinten, im Schnitt in in vergrößerter Darstellung,
- Fig. 3: die Anordnung des Rühr- und Ausbringorgans in der Trichterspritze in gleicher Darstellungsweise,
- Fig. 4: ein weiteres Rühr- und Ausbringorgan in gleicher Darstellungsweise,
- Fig. 5: die Anordnung eines Rühr- und Ausbringorgans in gleicher Darstellungsweise,
- Fig. 6: die Anordnung des Auswerfers des Rühr- und Ausbringorgans in der Draufsicht nach abgenommenen Zubringkörper gemäß Fig. 5,
- Fig. 7: die Anordnung des Rühr- und Ausbringkörpers gemäß Fig. 5, wobei der Ausbring- und Dosierkörper um 90° weitergedreht ist,
- Fig. 8: die Anordnung des Rühr- und Ausbringkörpers in der Darstellung gemäß den vorstehenden Figuren,
- Fig. 9: eine Anzahl von Auswerfern in Prinzipdarstellung in der Ansicht von hinten,
- Fig. 10: ein weiteres Auswerferorgan in der Ansicht von hinten,
- Fig. 11: der Auswerfer gemäß Fig. 10 in der Draufsicht,
- Fig. 12: die Anordnung des Rühr- und Ausbringorgans mit einem weiteren Auswerferelement in der Darstellungsweise gemäß Fig. 5,

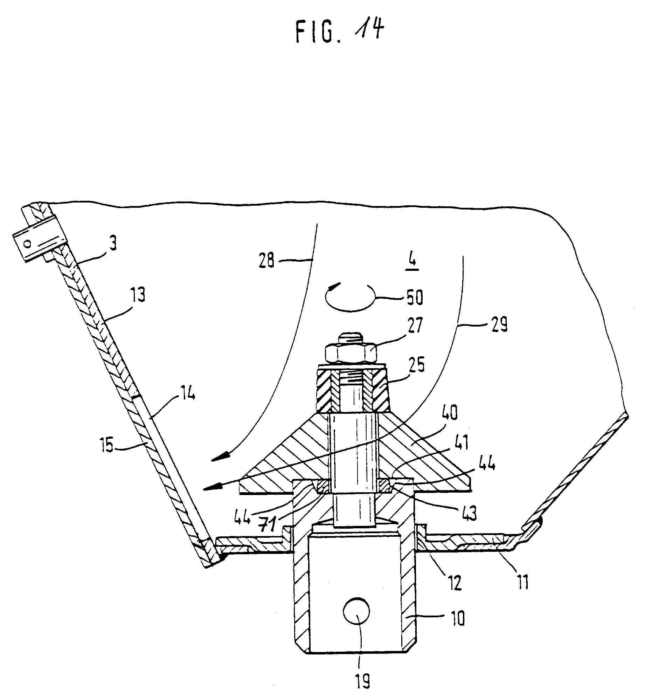

- Fig. 13: die Anordnung des Auswerferelementes des Rühr- und Ausbringorgans in der Draufsicht nach abgenommenem Zubringerkörper gemäß Fig. 12 und
- Fig. 14: die Anordnung des Rühr- und Ausbringorgans gemäß Fig. 12, wobei der Rühr- und Ausbringkörper um 90° weitergedreht ist.

Der Schleuderdüngerstreuer weist den Rahmen 1 und den Vorratsbehälter 2 auf. Auf der Vorderseite des Rahmens 1 sind in bekannter und daher nicht dargestellter Weise Dreipunktkupplungselemente zum Anbau des Schleuderdüngerstreuers an den Dreipunktkrafthebers eines Schleppers angeordnet. Der Vorratsbehälter 2 ist durch das dachförmige Mittelteil 3 in die beiden Behälterspitzen 4 aufgeteilt. Unterhalb der Behälterspitzen 4 befindet sich jeweils eine Schleuderscheibe 5 und 6 die auf den Getriebeausgangswellen 7 eines Zahnradgetriebes 8 angeordnet sind und ineinander entgegengesetztem Drehsinn rotierend von einer Kraftquelle, beispielsweise eines Ölmotors oder der Zapfwelle des den Schleuderdüngerstreuer tragenden Schleppers, angetrieben werden. Die Schleuderscheibenantriebswelle ist mittels des Wellenstückes 10, welches auf die Antriebswelle 7 aufgesetzt ist, durch die sich im Vorratsbehälterboden 11 befindliche Durchtrittsöffnung 12 bis in die Trichterspitze 4 des Vorratsbehälters hineingeführt.

In der schrägen Vorratsbehälterwand 13, die durch das dachförmige Mittelteil 3 gebildet wird, befindet sich die Austrittsöffnung 14. Vor der Austrittsöffnung 14 ist jeweils ein Schieber 15 angeordnet. Die beiden Schieber 15 sind unabhängig voneinander zu öffenen, so daß die Austrittsöffnungen 14 der beiden Trichterspitzen 7 unabhängig voneinander zu öffnen und zu schließen sind.

Auf der Oberseite des Wellenstückes 10 ist ein Bolzen 16 mit gegenüber dem Wellenstück 10 reduziertem Durchmesser angeordnet. Am Ende des Bolzens 16 befindet sich der ebenfalls eine reduzierenden Durchmesser aufweisende Schraubbolzen 17.

Auf dem Bolzen 16 des Wellenstückes 10 ist das Rühr- und Ausbringorgan 18 angeordnet, welches auch als Dosierorgan wirksam ist. Das Ausbringorgan 18 ist drehfest mit dem Wellenstück 10, welches wiederum über einen Stift 19 mit der Schleuderscheibenantriebswelle 7 verbunden ist, angeordnet. So wird das Rühr- und Ausbringorgan 18 mit der gleichen Drehzahl wie die Schleuderscheibens direkt angetrieben.

Das Ausbringorgan 18 befindet sich oberhalb des Behälterbodens 11 im Vorratsbehälter 2.

Das Rühr- und Ausbringorgan 18 ist als rotationssymetrischer Ausbringkörper 20 ausgebildet, dessen größter Durchmesser A (60 150 mm, vorzugsweise 80 mm) jeweils in der Nähe und auf Höhe des untersten Bereiches und des kleinsten Öffnungsquerschnittes der jeweiligen Austrittsöffnung 14 liegt. Somit befinden sich die rotierenden Teile des Zubringkörpers 20 im Düngerraum, also im unteren Vorratsbehälterbereich sowohl oberhalb als auch unterhalb dieses größten Durchmessers A des Ausbringkörpers rotierende Teile, und zwar derartig, daß die von dem Wellenstück 10 gebildete Antriebswelle, welche von unten durch den Behälterboden 11 hindurchragt und den Ausbringkörper 18 antreibt, einen wesentlich kleineren Durchmesser B als der jeweilige Zubringkörper 20 an seiner größten Ausdehnung (Durchmesser A) aufweist.

Der Ausbringkörper 20 weist eine völlig glatte Oberfläche auf. Desweiteren besitzt der Ausbringkörper eine kegelige Form, dessen Spitze 22 nach oben gerichtet ist. Die Außenfläche 23 des kegeligen Ausbringkörpers 20 schließen ein sich nach unten öffnenden Winkel α von etwa 60 - 120°, vorzugsweise 90° zueinander ein.

Zwischen der Unterseite 24 des Ausbringkörpers 20 an seiner größten radialen Ausdehnung und dem Behälterboden 11 ist ein Abstand C von mindestens 8 mm, vorzugsweise 10 mm vorhanden.

Desweiteren befindet sich zwischen der größten radialen Ausdehnung des Ausbringkörpers 20 und der Vorratsbehälterwand 13, in welcher sich die Austrittsöffnungen 14 befinden, ein Abstand D von nicht mehr als 40 mm.

Oberhalb des Ausbringkörpers 20 ist auf dem Schraubbolzen eine Gummifeder 25 angeordnet, wobei sich zwischen der Gummifeder und dem Schraubbolzen 17 eine Rohrhülse befindet. Insgesamt ist der Zubringerkörper 20 mittels der Schraube 27 gesichert.

Sowohl der Ausbringkörper 20 wie auch der Boden 11 sind leicht lösbar und auswechselbar ausgebildet, so daß der Boden 11 nach Abnahme des Zubringkörpers 20 nach oben abgenommen und falls erforderlich ersetzt werden kann.

Die Funktionsweise des Ausbringkörpers 20 ist folgende:
Der Düngerstrom, der von oben nach unten auf den Zubringkörper 20 nachfließt, wird schonend, wie durch die Pfeile 28 und 29 angedeutet ist, aufgeteilt und granulatschonend in Pfeilrichtung 28 und 29 zur Austrittsöffnung 14 geleitet. Hierbei ist der Ausbringkörper 20, welcher das Dsier- und Ausbringorgan sowie eine Art Rührkörper bildet, so ausgelegt, daß selbst, wenn die Austrittsöffnung 14 durch den Schieber 15 längere Zeit während des Betriebes, d.h. wenn der Ausbringkörper 20 mit der gleichen Drehzahl wie die Schleuderscheiben 5 rotiert, der Dünger nicht zermalmt wird und nicht zusammenbackt. Es entsteht also keine feste Düngerwand vor der Austrittsöffnung 14. Selbst nach langer Arbeitszeit bei einseitigem Streuen, wenn beispielsweise nur einseitig nach links gestreut werden soll, so daß die rechte Austrittsöffnung geschlossen ist, wird nach dem Öffnen der Austrittsöffnung 14 sofort Dünger durch die Austrittsöffnung 14 ausgebracht. Falls sich dennoch ein kleiner weicher Düngerring vor der Austrittsöffnung 14 gebildet haben sollte, welches bei sich extrem verhaltenden Düngersorten bei schlechten Witterungs- und Lagerbedingungen möglich ist, wird dieser durch das sich am Schieber 15 befindliche, und beispielsweise von einer Schraube 30 gebildete Verdrängerelement aufgelöst. Im übrigen ist der Schieber in Fig. 2 in der Stellung gezeichnet, in der die Austrittsöffnung 14 verschlossen ist.

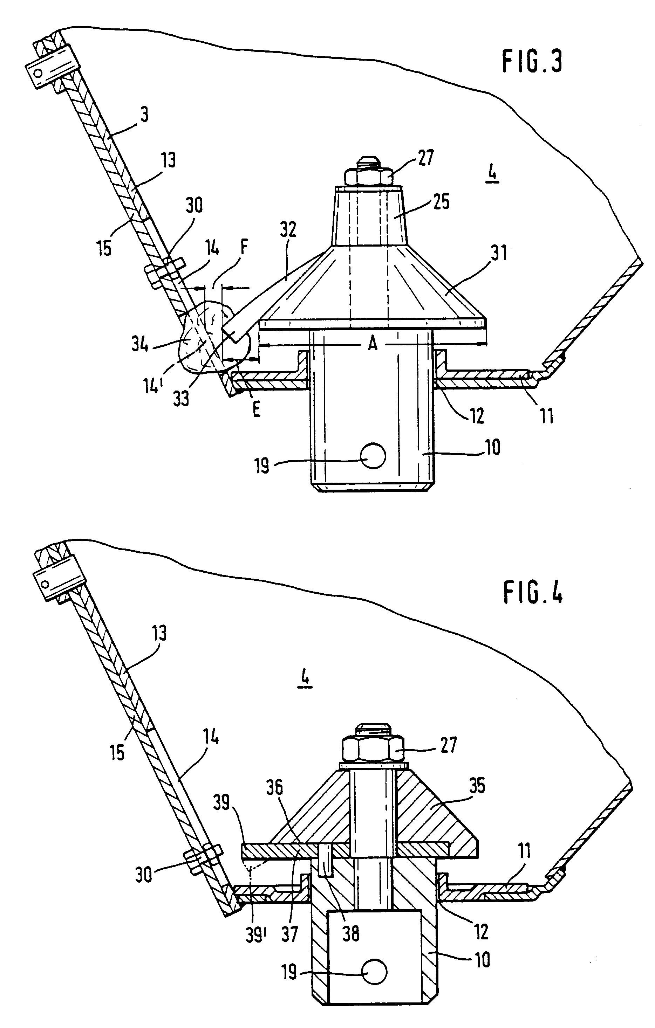

Die Fig. 3 zeigt eine andere Ausbildung des Ausbringkörpers. Dieser Ausbringkörper 31 weist an sich ebenfalls wieder eine kegelige Form auf, mit einer fast glatten Oberfläche. Einseitig ist eine kleine Erhebung 32 aufgesetzt, die sich nach unten zum Auswerfer 33 ausbildet. Dieser Auswerfer 33 überragt einseitig den Zubringerkörper 31 in der Nähe seines größten Durchmessers A. Der Auswerfer 33 überragt den Ausbringkörpers um das Maß E, welches etwa 10 mm beträgt.

Zwischen der größten radialen Ausdehnung des Auswerfers 32 und der Vorratsbehälterwand 13, in welcher sich die Austrittsöffnung 14 befindet, ist ein Abstand F vorhanden, der weniger als 25 mm beträgt.

Der Ausbringkörper 31 mit dem Auswerfer 32 ist elastisch nach oben und entgegen der Drehrichtung ausweichbar auf der Antriebswelle 10 mittels einer nicht näher dargestellten Überlastsicherung angeordnet.

Selbstverständlich ist es möglich, den Auswerfer 31 gemäß Fig. 3, falls es die Einsatzbedingungen erfordern, gegen den Ausbringkörper 20 gemäß Fig. 2 auszutauschen.

Durch den Auswerfer 33 wird gewährleistet, daß sich beispielsweise in der Austrittsöffnung 14', welche durch den Schieber 15 freigegeben ist, festsetzende Kluten 34 zerdrückt bzw. zerschlagen werden, so daß die Austrittsöffnung 14' von den Auswerfern 33 freigehalten wird.

Der Ausbringkörper 35 gemäß Fig. 4 weist wieder um eine kegelige Form auf. In der Unterseite des Ausbringkörpers 35 ist eine Nut 36 angeordnet, in welcher sich der Auswerfer 37 befindet. Über den Stift 38 ist der Auswerfer 37 und der Ausbringkörper 35 drehfest mit dem Wellenstück 10, welches über den Stift 19 mit der Schleuderscheibenantriebswelle 7 drehfest verbunden ist, drehfest verbunden.

Der Auswerfer 37 überragt den Ausbringkörper auf seiner Unterseite in seiner größten Ausdehnung mit dem Auswerferfinger 38. Dieser Auswerferfinger 39 kann rechtwinklig zu der Drehachse des Zubringers 35 angeordnet sein, oder, wie durch die mit strichpunktierten Linien angedeutet, in Position 39' nach unten abgebogen sein.

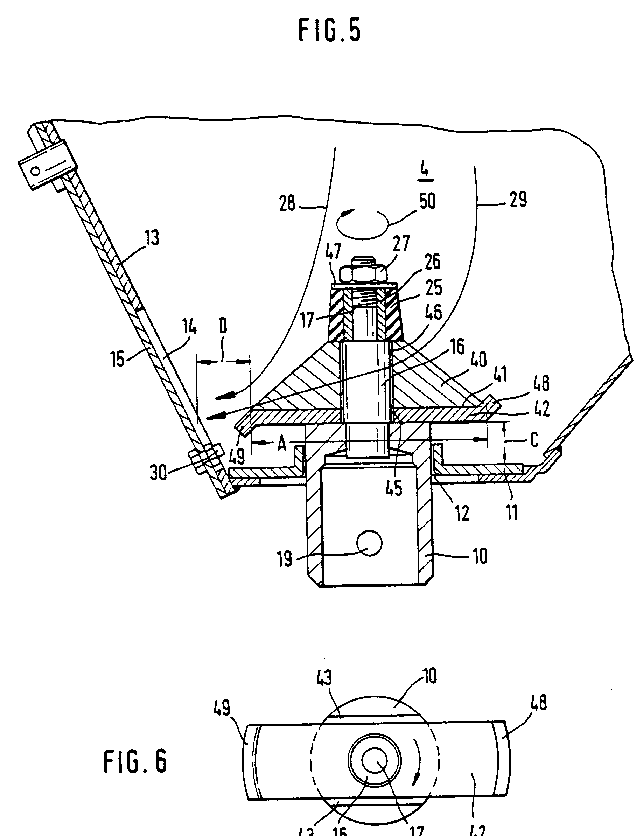

Das Rühr- und Ausbringorgan gemäß Fig. 5 ist als Ausbringkörper 40 ausgebildet. Der Ausbringkörper 40 weist eine kegelige Form auf. Der Ausbringkörper 40 weist auf seiner Unterseite eine quer verlaufende Längsnut 41 auf, in welcher der Auswerfer 42 eingelegt ist. Desweiteren weist das Wellenstück 10 auf seiner Oberseite ebenfalls die eingefräste Quernut 43 auf. Diese Quernut 43 weist die schrägen Seitenwände 44 auf. In diese Quernut 43 ist ebenfalls der Auswerfer 42 eingelegt. Der Auswerfer 42 weist in der Mitte die Bohrung 45 auf, mittels welcher er von oben auf den Bolzen 16 aufgesteckt werden kann. Ebenfalls weist der Ausbringkörper 40 die Bohrung 46 auf, mittels welcher er ebenfalls von oben auf den Bolzen 16 aufgesteckt ist. Der Schraubbolzen 26 weist gegenüber dem Bolzen 16 einen reduzierten Durchmesser auf. Auf den Schraubbolzen 26 ist zunächst die Rohrhülse 26 aufgesteckt. Auf diese Rohrhülse 26 ist die Gummifeder 25 aufgesteckt. Mittels der Scheibe 47 und der Mutter 27 sind sämtliche Teile gesichert. Durch die Gummifeder 25 können der Auswerfer 42 und der Ausbringkörper 40 elastisch nach oben ausweichen. In Verbindung mit der Quernut 43 und den schrägen Wänden 44 ergibt sich somit eine Überlastsicherung, d.h. wenn ein unzerdrückbarer Gegenstand die ungehinderte Rotation des Auswerfers 42 behindert, springt der Auswerfer 42 aus der Nut 43 aufgrund der schrägen Wände 44 nach oben, wobei die Gummifeder 25 zusammengedrückt wird.

Der Auswerfer 42 überragt den Ausbringkörper 40 in der Nähe seines größten Durchmessers A beidseitig mit den Auswerferfingern 48 und 49. Die äußeren Enden der Auswerferfinger 48 und 49 überragen den Ausbringkörper 40 bezüglich seines größten Durchmessers A um nicht mehr als 15 mm, vorzugsweise nur um 5 - 10 mm.

Der Ausbringkörper 40 weist eine kegelige Form auf, dessen Spitze nach oben gerichtet ist.

Zwischen dem Ausbringkörper 40 an seiner größten radialen Ausdehnung A und dem Behälterboden 11 ist ein Abstand C von mindestens 8 mm, vorzugsweise mehr als 10 mm vorhanden. Somit ist hier ein Abstand C vorhanden, der größer als der mittlere Durchmesser der Korngröße des auszubringenden Düngers ist. Somit können keine Düngerkörner nachteilig zerdrückt werden.

Zwischen der größten radialen Ausdehnung des Ausbringerkörpers 40 und der Vorratsbehälterwand 13, in welcher sich die Austrittsöffnungen 14 befinden, ist ein Abstand D von nicht mehr als 40 mm vorhanden. Zwischen der größten radialen Ausdehnung des Auswerfers 42, welche von den Auswerferfingern 48 und 49 gebildet werden, und der Vorratsbehälter 13, in welcher sich die Austrittsöffnungen 14 befinden, ist ein Abstand von mehr als 25 mm vorhanden.

Wie bereits vor geschildert, ist der Auswerfer 42 elastisch nach oben und entgegen der Drehrichtung ausweichbar mittels einer Überlastsicherung auf seiner Antriebswelle 10 angeordnet.

Der Auswerfer 42 ist aus Stahl, vorzugsweise einem hochfesten und nichtrostendem Stahl hergestellt. Der Ausbringkörper 40 kann beispielsweise als Kunststoffteil aus Kunststoff hergestellt sein. Desweiteren ist der Auswerfer und der Ausbringkörper 40 leicht lösbar und auswechselbar auf der Antriebswelle 10 befestigt.

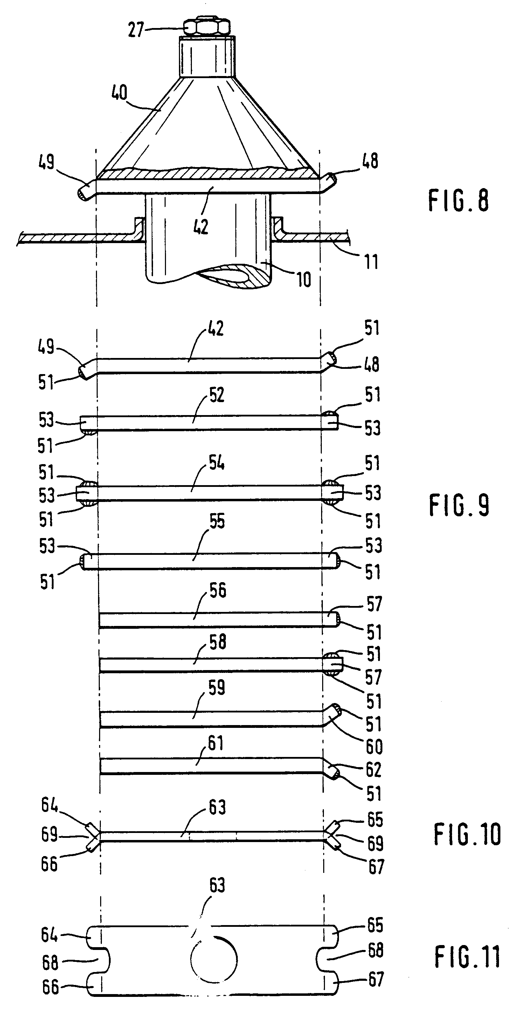

Anhand der Fig. 8 und 9 soll nun aufgezeigt werden, daß unterschiedliche Auswerfer im Zusammenhang mit dem Ausbringkörper einzusetzen sind. Die einzelnen Formen werden im Folgenden kurz beschrieben.

Die Fig. 8 zeigt zunächst einen Ausbringkörper 40 und einen Auswerfer 42 mit den Auswerferfingern 48 und 49 gemäß Fig. 5 bis 7. Die Enden der Auswerferfinger 48 und 49 können beispielsweise mit einer Aufpanzerung 51 versehen sein, um so die Standseite des Auswerfers wesentlich erhöhen zu können.

Der Auswerfer 42 kann gegen einen Auswerfer 52 ausgetauscht werden, dessen den Ausbringkörper 40 an seiner größten radialen Ausdehnung überragenden Auswerferfingers 53 in gleicher Ebene wie der übrige Teil des Auswerfers 52 ligen.

Bei dem Auswerfer 52 sind die Auswerferfinger 53 entweder auf der Ober- oder auf der Unterseite mit einer Aufpanzerung 51 versehen. Der Auswerfer 54 unterscheidet sich von dem Auswerfer 52 dadurch, daß die Auswerferfinger 53 beidseitig mit einer Aufpanzerung versehen sind und eine geringfügig größere Lage aufweisen. Der Auswerfer 55 unterscheidet sich von den Auswerfern 54 und 52 dadurch, daß die Auswerferfinger 53 auf ihrer Stirnseite mit einer Aufpanzerung versehen sind. Der Auswerfer 56 überragt den Ausbringkörper 40 nur einseitig mit dem Auswerferfinger 57. Dieser Auswerferfinger 57 ist auf seiner Stirnseite mit einer Aufpanzerung 51 versehen. Der Auswerfer 58 unterscheidet sich von dem Auswerfer 56 dadurch, daß der Auswerferfinger 57 auf seiner ober- und Unterseite mit einer Aufpanzerung versehen ist.

Der Auswerfer 59 überragt einseitig mit dem Auswerferfinger 60, der nach oben abgebogen ist den Zubringerkörper 40.

Der Auswerfer 61, dessen Auswerferfinger 62 nach unten umgebogen ist, überragt ebenfalls nur einseitig den Zubringerkörper 40 an seiner größten radialen Ausdehnung.

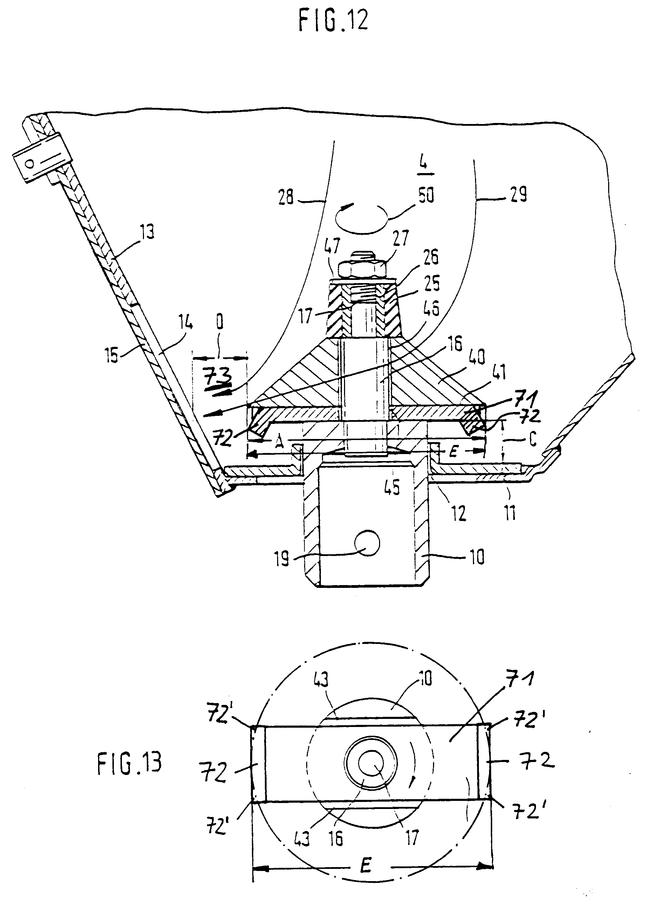

Die Fig. 10 und 11 zeigen den Auswerfer 63, der mit seinen Auswerferfingern 64,65,66 und 67 den Ausbringkörper 40 an seiner radialen größten Ausdehnung überragt. Die Auswerferfinger 64 und 66 sowie 65 und 67 sind jeweils durch eine Aussparung 68 entstanden. Der Auswerfer 63 weist auf jeder dem Ausbringkörper 40 überragenden Seite jeweils zwei Auswerferfinger, nämlich 64 und 66 sowie 65 und 67 auf, wobei auf jeder Seite des Zubringerkörpers 40 der eine Finger 64 und 65 nach oben und der andere Finger 66 und 67 nach unten umgebogen sind. Hierbei sind die auf der längeren Seite gerade unmittelbar gegenüberliegende Finger 64 und 65 gemeinsam nach oben und die gerade gegenüberliegenden Finger 66 und 67 gemeinsam nach unten umgebogen. Hierdurch ist es möglich, selbst bei in entgegengesetztem Drehsinn rotierenden Schleuderscheiben 5 und Auswerfern sowie Zubringkörpern 40 gemäß Drehrichtung 50 und 50' gleich auszubilden, weil die Auswerferfinger spiegelbildlich ausgebildet sind.

Wenn der Auswerfer 63 zusammen mit dem Zubringkörper 40 eingesetzt wird, ist darauf zu achten, daß das Verdränger- oder Aufbrechelement 30 an dem Schieber so angeordnet ist, daß sich das Verdränger- und Aufbrechelement 30 sich auf Höhe des Auswerfers derart befindet, daß das Verdränger- und Aufbrechelement 30 sich in Richtung in auf Höhe der Spreizung 69 der Auswerferfinger 64,65,66 und 67 befindet.

Zum Schluß sei darauf hingewiesen, daß die verschiedenen Auswerfer leicht gegeneinander ausgetauscht werden können, wenn es die Einsatzverhältnisse erfordern.

Das Ausbring- und Dosieroragn 70 gemäß Fig. 12 unterscheidet sich von dem Ausbring- und Dosierorgan gemäß Fig. 5 dauch eine andere Ausbildung des Auswerfers. Dieser Auswerfer 71 ist unterhalb des Ausbringkörpers 40, der eine kegelstumpfförmige Form aufweist, in der sich im Ausbringkörper 40 befindlichen Längsnut 41 eingelegt. Der Auswerfer 71 weist in der Mitte die Bohrung 45 auf, mittels welcher er von oben auf den Bolzen 16 aufgesteckt ist. Das Längenmaß E des Auswerfers 71 entspricht in etwa dem größten Durchmesser A des Ausbringkörpers 40. Die äußeren Enden, d.h. die Auswerferfinger 72 des Auswerfers sind beidseitig nach unten abgebogen. Hierbei können die äußersten Breitseitenteile 72' der Auswerferfinder 72 etwas, beispielsweise um etwa 2 mm über die äußere untere Kontur des Ausbringkörpers 40 in der Draufsicht überstehen. Die Oberfläche des Ausbringkörpers 40 ist auf seiner kegelstumpfförmigen Oberseite völlig glatt. Der Zwischenraum 73 zwischen der Wand 13, in der sich die Auslauföffnung 14 befindet, und dem Ausbringkörper 40 ist trichter- bzw. keilförmig ausgebildet.

Der Auswerfer 71 ist aus Stahl hergestellt. Der Ausbringkörper 40 ist aus einem harten Kunststoff hergestellt, damit die Oberfläche möglicht lange glatt bleibt.

Als besonders vorteilhaft hat sich gezeigt, den Durchmesser A und das Längenmaß E in einer Größe von ca. 80 mm zu wählen, weil hier der beste Kompromiß zwischen ausreichender Düngerförder- und Rührwirkung einerseits und dem Nichtzusammenbacken des Düngers sowie ausreichend schonender Behandlung des Düngers andererseits besteht. Der Dünger fließt dann gleichmäßig und ruhig aus der Auslauföffnung 14 heraus.

Die Funktionsweise des Ausbringkörpers 40 in Verbindung mit dem Auswerfer 71 gemäß Fig. 12 ist folgende:
Der Düngerstrom, der von oben nach unten auf den Ausbringkörper 40 nachfließt, wird schonend, wie durch die Pfeile 28 und 29 angedeutet ist, aufgeteilt und granulatschonend in Pfeilrichtung 28 und 29 zur Austrittsöffnung 14 geleitet. Hierbei ist der Ausbringkörper 40, welcher das Dosier- und Ausbringorgan sowie eine Art Rührkörper bildet zusammen mit dem Auswerfer 71, so ausgelegt, daß selbst, wenn die Austrittsöffnung 14 durch den Schieber 15 längere Zeit während des Betriebes, d.h. wenn der Ausbringkörper 40 mit der gleichen Drehzahl wie die Schleuderscheiben 5 rotiert, der Dünger nicht zermalmt wird und nicht zusammenbackt Es entsteht also keine feste Düngerwand vor der Austrittsöffnung 14. Selbst nach langer Arbeitszeit bei einseitigem Streuen, wenn beispielsweise nur einseitig nach links gestreut werden soll, so daß die rechte Austrittsöffnung geschlossen ist, wird nach dem Öffnen der Austrittsöffnung 14 sofort Dünger durch die Austrittsöffnung 14 ausgebracht. Der Auswerfer 71 mit Auswerferfingern 72 unterstützt das Ausbringen des Düngers sowie dessen Förderung in Richtung der Auslauföffnung in äußerst granulatschonender Weise. Weiterhin sorgt der Auswerfer 71 mit einen Auswerferfingern 72 für eine vollständige Entleerung des Vorratsbehälters, so daß keine Restmengen im Vorratsbehälter bleiben.

## Patentansprüche

1. Schleuderdüngerstreuer mit Vorratsbehälter und zumindest zwei rotierend angetriebenen Schleuderscheiben, denen die auszubringenden und sich im Vorratsbehälter befindlichen Düngemittel über sich im unteren Vorratsbehälterbereich befindlichen und rotierend angetriebenen Rühr- und Ausbringorganen durch zu öffnende und zu schließende Austrittsöffnungen, die sich in den vorzugsweise schrägen oder aufrechten Vorratsbehälterwänden befinden, zuzuführen sind und sich oberhalb des Vorratsbehälterboden befinden, wobei die Rühr- und Ausbringorgane über die durch den Vorratsbehälterboden geführten Antriebswellen mit der gleichen Drehzahl wie die Schleuderscheiben direkt angetrieben werden und aus zumindest etwa rotationssymetrischen Ausbringkörpern (20,31,35,40) bestehen, wobei die Rühr- und Ausbringorgane eine zumindest annähernd kegelige oder oder kegelstumpfförmige Gestalt aufweisen, wobei der größte Durchmesser (A) des Ausbringkörpers (20,31,35,40) sich auf seiner Unterseite befindet, wobei der jeweilige Ausbringkörper (20,31,35,40) in der Nähe seines größten Durchmessers (A) von zumindest einem Auswerferelement (33,37,42,52,54,55,56,58,59,61,63) überragt wird, dadurch gekennzeichnet, daß der Auswerfer (33,37,42,52,54,55,56,58,59,61,63) den Ausbringkörper (20,31,35,40) bezüglich seines größten Durchmessers (A) nicht mehr als um 15 mm überragt, und daß zwischen der größten radialen Ausdehnung (A) des Ausbringkörpers (20,31,35,40) und der Vorratsbehälterwand (13), in welcher sich die Austrittsöffnungen (14) befinden, ein Abstand (D) von nicht mehr als 40 mm vorhanden ist.

2. Schleuderdüngerstreuer nach Anspruch 1, dadurch gekennzeichnet, daß der Ausbringkörper (20,31,35,40) auf seiner Unterseite mit dem Auswerferelemt (33,37,42,52,54,55,56,58,59,61,63,71) versehen ist.

3. Schleuderdüngderstreuer nach einem oder mehreren der vorstehenden Ansprüche, dadurch gekennzeichet, daß die Rühr- und Ausbringorgane (18) aus zumindest etwa rotationssymetrischen Ausbringkörpern (20,31,35,40) bestehen, deren größter Durchmesser A jeweils in der Nähe und/oder etwa auf Höhe des unteren und/oder untersten Bereichs und/oder der kleinen und/oder kleinsten Öffnungsquerschnitte der jeweiligen Austrittsöffnungen (14,14') liegt, wobei sich im Düngerraum, also im unteren Vorratsbehälterbereich oberhalb dieses größten Durchmessers des Ausbringkörpers (20,31,35,40) rotierende Teile befinden, die einen wesentlich kleineren Durchmesser (B) (vorzugsweise nicht größer als die Hälfte des größten Durchmessers (A) des Zubringkörpers (29,31,35,40)) aufweisen als der jeweilige Zubringkörper (29,31,35,40) an seiner größten Ausdehnung (A).

4. Schleuderdüngerstreuer nach einem oder mehreren der vorstehenden Ansprüche, dadurch gekennzeichnet, daß sich im Düngerraum, also im unteren Vorratsbehälterbereich oberhalb dieses größten Durchmessers (A) des Ausbringkörpers (20,31,35,40) rotierende Teile befinden und zwar derartig, daß die Antriebswelle (10), welche von unten durch den Behälterboden (12) hindurchragt und die Dosier- und Ausbringorgane (18,20,31,35,40) antreibt, einen wesentlich kleineren Durchmesser (B), vorzugsweise nicht größer als die Hälfte des größten Durchmessers (A) des Zubringkörpers (29,31,35,40), aufweisen als der jeweilige Zubringkörper (20,31,35,40) an seiner größten Ausdehnung (A).

5. Schleuderdüngerstreuer nach einem oder mehreren der vorstehenden Ansprüche, dadurch gekennzeichnet, daß der jeweilige Zubringerkörper (20,31,35,40) eine zumindest etwa völlig glatte oder nur mit sehr kleinen Erhebungen (32) versehene Oberfläche (23) aufweist.

6. Schleuderdüngerstreuer nach einem oder mehreren der vorstehenden Ansprüche, dadurch gekennzeichnet, daß der Zubringkörper (20,31,35,40) eine glatte Oberfläche (23) aufweist.

7. Schleuderdüngerstreuer nach einem oder mehreren der vorstehenden Ansprüche, dadurch gekennzeichnet, daß das Längenmaß E des Auswerferelementes 71 in etwa dem größten Durchmesser A des Ausbringerkörpers 40 entspricht.

8. Schleuderdüngerstreuer nach einem oder mehreren der vorstehenden Ansprüche, dadurch gekennzeichnet, daß das Längemaß des Auswerferelementes kleiner ist als der größte Durchmesser des Ausbringkörpers.

9. Schleuderdüngerstreuer nach einem oder mehreren der vorstehenden Ansprüche, dadurch gekennzeichnet, daß der Zubringerkörper (20,31,35,40) eine kegelige oder kegelstumpfförmige Form aufweist, dessen Spitze (22) nach oben gerichtet ist.

10. Schleuderdüngerstreuer nach einem oder mehreren der vorstehenden Ansprüche, dadurch gekennzeichnet, daß die Außenflächen (23) des kegeligen Zubringerkörpers (20,31,35,40) einen sich nach unten öffenen Winkel einschließen, der etwa 60 - 120°, vorzugsweise 90° entspricht.

11. Schleuderdüngerstreuer nach einem oder mehreren der vorstehenden Ansprüche, dadurch gekennzeichnet, daß ein erheblicher senkrechter Abstand zwischen dem Zubringerkörper (20,31,35,40) an seiner größten radialen Ausdehnung (A) und dem Behälterboden (11) vorhanden ist, wobei dieser Abstand (C) mindestens 8 mm, vorzugsweise mehr als 10 mm beträgt.

12. Schleuderdüngerstreuer nach einem oder mehreren der vorstehenden Ansprüche, dadurch gekennzeichnet, daß zwischen der größten radialen Ausdehnung (A) des Auswerfers (33,37,42,52,54,55,56,58,58,61,63) und der Vorratsbehälterwand (13), in welcher sich die Austrittsöffnungen (14) befinden, ein Abstand (F) von mehr als 25 mm vorhanden ist.

13. Schleuderdüngerstreuer nach einem oder mehreren der vorstehenden Ansprüche, dadurch gekennzeichnet, daß der Auswerfer (33,37,42,52,54,55,58,56,59,61,63) mittels einer Überlastsicherung auf der Antriebswelle (10) befestigt ist.

14. Schleuderdüngerstreuer nach einem oder mehreren der vorstehenden Ansprüche, dadurch gekennzeichnet, daß der Auswerfer (33,37,42,52,54,55,56,58,59,61,63) unterhalb des Zubringerkörpers (20,31,35,40) angeordnet ist.

15. Schleuderdüngerstreuer nach einem oder mehreren der vorstehenden Ansprüche, dadurch gekennzeichnet, daß der Auswerfer (33,37,42,52,54,55,56,58,59,61,63) elastisch nach oben und/oder entgegen der Drehrichtung (50,50') ausweichbar auf der Antriebswelle (10) angeordnet ist.

16. Schleuderdüngerstreuer nach einem oder mehreren der vorstehenden Ansprüche, dadurch gekennzeichnet, daß der Auswerfer (33,37,42,52,54,55,56,58,59,61,63) aus Stahl, vorzugsweise aus einem hochfesten und/oder nicht rostendem Stahl, vorzugsweise mit einer zusätzlichen Aufpanzerung (51) ausgestattet ist.

17. Schleuderdüngerstreuer nach einem oder mehreren der vorstehenden Ansprüche, dadurch gekennzeichnet, daß der Zubringerkörper (20,31,35,40) selbst elastisch ausgebildet ist.

18. Schleuderdüngerstreuer nach einem oder mehreren der vorstehenden Ansprüche, dadurch gekennzeichnet, daß der Zubringerkörper (20,31,35,40) als Kunststoffteil ausgebildet ist.

19. Schleuderdüngerstreuer nach einem oder mehreren der vorstehenden Ansprüche, dadurch gekennzeichnet, daß oberhalb des Zubringerkörpers (20,31,35,40) eine Feder (25), beispielsweise aus Gummi, angeordnet ist.

20. Schleuderdüngerstreuer nach einem oder mehreren der vorstehenden Ansprüche, dadurch gekennzeichnet, daß innerhalb der Gummifeder (25) ein Distanzrohr (26) vorgesehen ist.

21. Schleuderdüngerstreuer nach einem oder mehreren der vorstehenden Ansprüche, dadurch gekennzeichnet, daß der Auswerfer (33,37,42,52,54,55,56,58,59,61,63) auswechselbar auf der Antriebswelle (10) angeordnet ist.

22. Schleuderdüngerstreuer nach einem oder mehreren der vorstehenden Ansprüche, dadurch gekennzeichnet, daß der Zubringerkörper (35,40) auf seiner Unterseite eine Aussparungsnut (36,43) aufweist, in welcher der Auswerfer (33,37,42,52,54,55,56,58,59,61,63) eingreift.

23. Schleuderdüngerstreuer nach einem oder mehreren der vorstehenden Ansprüche, dadurch gekennzeichnet, daß der Zubringerkörper (20,31,35,40) drehfest mit der jeweiligen Antriebswelle (10) verbunden ist.

24. Schleuderdüngerstreuer nach einem oder mehreren der vorstehenden Ansprüche, dadurch gekennzeichnet, daß der Auswerfer (33,37,42,52,54,55,56,58,59,61,63) drehfest, jedoch vorzugsweise mit einer Überlastdrehsicherung mit der Antriebswelle (10) verbunden ist.

25. Schleuderdüngerstreuer nach einem oder mehreren der vorstehenden Ansprüche, dadurch gekennzeichnet, daß der Auswerfer (37,56,58,59,61) einseitig über die größte Ausdehnung (A) des Zubringerkörpers (20,31,35,40) hinausragt.

26. Schleuderdüngerstreuer nach einem oder mehreren der vorstehenden Ansprüche, dadurch gekennzeichnet, daß der Auswerfer (42,52,54,55) den Zubringerkörper (40) beidseitig auf diametral gegenüberliegenden Seiten des Zubringerkörpers (20) mit kleinen Abständen (E) überragt.

27. Schleuderdüngerstreuer nach einem oder mehreren der vorstehenden Ansprüche, dadurch gekennzeichnet, daß der Auswerfer (37,52,54,55,56) in seinem dem Zubringerkörper (35,40) überragenden Bereich horizontal und rechtwinklig zur Antriebswelle (10) ausgebildet ist.

28. Schleuderdüngerstreuer nach einem oder mehreren der vorstehenden Ansprüche, dadurch gekennzeichnet, daß der über den größten Bereich (A) des Zubringkörpers (35,40) überstehende Bereich (A) des Auswerfers (37,42,59,61,63) schräg nach oben und/oder unten abgebogen ist.

29. Schleuderdüngerstreuer nach einem oder mehreren der vorstehenden Ansprüche, dadurch gekennzeichnet, daß der Auswerfer (42,63) auf der einen Seite nach unten und der anderen Seite nach oben umgebogen ist.

30. Schleuderdüngerstreuer nach einem oder mehreren der vorstehenden Ansprüche, dadurch gekennzeichnet, daß der Auswerfer (63) auf jeder dem Zubringkörper (40) überragenden Seite zwei Auswerferfinger (64,65,66,67) aufweist, wobei auf jeder Seite der eine Finger (64,65) nach oben und der andere Finger (66,67) nach unten umgebogen ist.

31. Schleuderdüngerstreuer nach einem oder mehreren der vorstehenden Ansprüche, dadurch gekennzeichnet, daß die auf der längeren Seite gerade gegenüber liegende Finger (64,65) gemeinsam nach oben oder die Finger (66,67) gemeinsam nach unten umgebogen sind.

32. Schleuderdüngerstreuer nach einem oder mehreren der vorstehenden Ansprüche, dadurch gekennzeichnet, wobei sämtliche Auswerfer (33,37,42,52,54,55,56,58,59,61,63) gleich ausgebildet sind.

33. Schleuderdüngerstreuer nach einem oder mehreren der vorstehenden Ansprüche, dadurch gekennzeichnet, daß die beiden Enden (72) des Auswerfers (71) nach unten weisen.

34. Schleuderdüngerstreuer nach einem oder mehreren der vorstehenden Ansprüche, dadurch gekennzeichnet, daß die Durchtrittsöffnungen (12), durch welche die Antriebswellen (10) zum Antrieb der Zubringkörper (20,31,35,40) geführt sind, einen wesentlich kleineren Durchmesser als die Zubringerkörper (20,31,35,40) in ihrer größten Ausdehnung (A) aufweisen.

35. Schleuderdüngerstreuer nach einem oder mehreren der vorstehenden Ansprüche, dadurch gekennzeichnet, daß die Auswerfer (33,37,42,52,54,55,56,58,59,61,63) und/oder Zubringkörper (20,31,35,40) leicht auswechselbar auf ihrer jeweiligen Antriebswelle (10) angeordnet sind.

36. Schleuderdüngerstreuer nach einem oder mehreren der vorstehenden Ansprüche, dadurch gekennzeichnet, daß die Bodenplatten (11) leicht lösbar innerhalb des Vorratsbehälters (2) angeordnet und nach oben herausnehmbar angeordnet sind.

37. Schleuderdüngerstreuer nach einem oder mehreren der vorstehenden Ansprüche, dadurch gekennzeichnet, daß vor den Austrittsöffnungen (14) Verschlußschieber (15) angeordnet sind, die auf ihrer den Austrittsöffnungen (14) und dem Vorratsbehälterinnenraum zugewandten Seite im Bereich der kleinsten Öffnung ein Verdränger- und/oder Aufbrechelement (30) angeordnet ist, welches sich auf Höhe des Auswerfers (33,37,42,52,54,55,56,58,59,61,63) und/oder der größten Ausdehnung des Ausbringkörpers (20,31,35,40) befindet.

38. Schleuderdüngerstreuer nach einem oder mehreren der vorstehenden Ansprüche, dadurch gekennzeichnet, daß die Antriebswelle durch ein auf die Schleuderscheibenantriebswelle (7) aufgesetztes Wellenstück (10) gebildet wird, welches durch den Vorratsbehälterboden (11) hindurchgeführt ist, und auf seiner Oberseite den Zubringerkörper (20,31,35,40) und/oder Auswerfer (33,37,42,52,54,55,56,58,59,61,63) trägt.

39. Schleuderdüngerstreuer nach einem oder mehreren der vorstehenden Ansprüche, dadurch gekennzeichnet, daß das Verlängerungsteil (10) oberhalb des Vorratsbehälterbodens (11) eine Überlastsicherung aufweist.

40. Schleuderdüngerstreuer nach einem oder mehreren der vorstehenden Ansprüche, dadurch gekennzeichnet, daß die Überlastsicherung als eine horizontal verlaufende Nut (43) mit schrägen Wänden (44) ausgebildet ist, in welche der aus Flachmaterial hergestellte Auswerfer (42,52,54,55,56,58,59,61,63) faßt, daß auf die Welle (14) oberhalb des Auswerfers (33,37,42,52,54,55,56,58,59,61,63) der Zubringkörper (20,31,35,40) abgesetzt ist, und daß sich oberhalb des Zubringkörpers (20,31,35,40) eine Feder, beispielsweise eine Gummifeder (25) befindet.

41. Schleuderdüngerstreuer nach einem oder mehreren der vorstehenden Ansprüche, dadurch gekennzeichnet, daß der Auswerfer (33) einteilig mit dem Zubringerkörper (31) ausgebildet ist.

42. Schleuderdüngerstreuer nach einem oder mehreren der vorstehenden Ansprüche, dadurch gekennzeichnet, daß der Auswerfer (33) von oben auf die obere Fläche des Zubringkörpers (31), insbesondere auf die schräg nach unten verlaufenden kegelige Fläche des Zubringerkörpers (31) aufgesetzt ist.

43. Schleuderdüngerstreuer nach einem oder mehreren der vorstehenden Ansprüche, dadurch gekennzeichnet, daß die Finger (48,49,64,65,66,67) des Auswerfers (42,63) derart umgebogen sind, daß der eine Finger (49,66,67) sich oberhalb und der andere Finger sich unterhalb des Verdrängelementes (30) sich befindet.

44. Schleuderdüngerstreuer nach einem oder mehreren der vorstehenden Ansprüche, dadurch gekennzeichnet, daß verschiedenartig ausgebildet Auswerfer (33,37,42,52,54,55,56,58,59,61,63) und/oder Zubringerkörper (20,31,35,40) vorgesehen und gegeneinander austauschbar sind.

45. Schleuderdüngerstreuer nach einem oder mehreren der vorstehenden Ansprüche, dadurch gekennzeichnet, daß die Rühr- und Ausbringorgane oberhalb des Behälterbodens im Vorratsbehälter angeordnet sind.

46. Schleuderdüngerstreuer nach einem oder mehreren der vorstehenden Ansprüche, dadurch gekennzeichnet, daß der Zwischenraum (73) zwischen der Wand (13), in welcher sich die Auslauföffnung (14) befindet, und dem Ausbringkörper (40) trichter- oder keilförmig ausgebildet ist.

47. Schleuderdüngerstreuer nach einem oder mehreren der vorstehenden Ansprüche, dadurch gekennzeichnet, daß im wesentlichen nur die äußersten Breitseitenteile (72') der Auswerferfinger (72) über die äußere untere Kontur des Ausbringkörpers (40) überstehen.

## Claims

1. Centrifugal fertiliser broadcaster, including a hopper and at least two rotatably driven centrifugal discs, the fertilisers which are to be distributed and are situated in the hopper having to be supplied to said centrifugal discs through outlet apertures which are to be opened and closed and are situated in the hopper walls, which are preferably inclined or extend upwardly, said fertilisers being supplied via rotatably driven agitating and distributing members, which are situated in the lower region of the hopper and are situated above the base of the hopper, the agitating and distributing members being driven directly via the drive shafts, which are guided through the base of the hopper, at the same speed as the centrifugal discs and comprising at least substantially rotationally symmetrical distributing members (20, 31, 35, 40), the agitating and distributing members having a configuration which is at least approximately conical or frustoconical, the greatest diameter (A) of the distributing member (20, 31, 35, 40) being situated on its underside, at least one ejector member (33, 37, 42, 52, 54, 55, 56, 58, 59, 61, 63) protruding beyond the respective distributing member (20, 31, 35, 40) in the vicinity of its greatest diameter (A), characterised in that the ejector member (33, 37, 42, 52, 54, 55, 56, 58, 59, 61, 63) protrudes no more than 15 mm beyond the distributing member (20, 31, 35, 40) in respect of its greatest diameter (A), and in that there is a spacing (D) of no more than 40 mm between the greatest radial extent (A) of the distributing member (20, 31, 35, 40) and the hopper wall (13), in which the outlet apertures (14) are provided.

2. Centrifugal fertiliser broadcaster according to claim 1, characterised in that the distributing member (20, 31, 35, 40) is provided on its underside with the ejector member (33, 37, 42, 52, 54, 55, 56, 58, 59, 61, 63, 71).

3. Centrifugal fertiliser broadcaster according to one or more of the preceding claims, characterised in that the agitating and distributing members (18) comprise at least substantially rotationally symmetrical distributing members (20, 31, 35, 40), the greatest diameter (A) of which lies respectively in the vicinity of and/or substantially on a level with the lower and/or lowermost region and/or the small and/or smallest cross-sections of opening of the respective outlet apertures (14, 14'), rotating members being situated in the fertiliser chamber, that is to say in the lower region of the hopper above this greatest diameter of the distributing member (20, 31, 35, 40), said rotating members having a substantially smaller diameter (B) (preferably not greater than half the greatest diameter (A) of the distributing member (20, 31, 35, 40) than the respective distributing member (20, 31, 35, 40) at its greatest extent (A).

4. Centrifugal fertiliser broadcaster according to one or more of the preceding claims, characterised in that rotating members are situated in the fertiliser chamber, that is to say in the lower region of the hopper above this greatest diameter (A) of the distributing member (20, 31, 35, 40), in such a manner that the drive shaft (10), which protrudes through the hopper base (12) from below and drives the metering and distributing members (18, 20, 31, 35, 40), has a substantially smaller diameter (B), preferably not greater than half the greatest diameter (A) of the distributing member (20, 31, 35, 40) than the respective distributing member (20, 31, 35, 40) at its greatest extent (A).

5. Centrifugal fertiliser broadcaster according to one or more of the preceding claims, characterised in that the respective distributing member (20, 31, 35, 40) has a surface (23) which is at least substantially entirely smooth or is only provided with very small raised portions (32).

6. Centrifugal fertiliser broadcaster according to one or more of the preceding claims, characterised in that the distributing member (20, 31, 35, 40) has a smooth surface (23).

7. Centrifugal fertiliser broadcaster according to one or more of the preceding claims, characterised in that the length dimension (E) of the ejector member (71) corresponds substantially to the greatest diameter (A) of the distributing member (40).

8. Centrifugal fertiliser broadcaster according to one or more of the preceding claims, characterised in that the length dimension of the ejector member is smaller than the greatest diameter of the distributing member.

9. Centrifugal fertiliser broadcaster according to one or more of the preceding claims, characterised in that the distributing member (20, 31, 35, 40) has a conical or frustoconical configuration, the apex (22) of which is upwardly orientated.

10. Centrifugal fertiliser broadcaster according to one or more of the preceding claims, characterised in that the external surfaces (23) of the conical distributing member (20, 31, 35, 40) form an angle, which opens downwardly and corresponds substantially to between 60 and 120°, preferably 90°.

11. Centrifugal fertiliser broadcaster according to one or more of the preceding claims, characterised in that there is a considerable vertical spacing between the distributing member (20, 31, 35, 40) at its greatest radial extent (A) and the hopper base (11), this spacing (C) being at least 8 mm, and preferably more than 10 mm.

12. Centrifugal fertiliser broadcaster according to one or more of the preceding claims, characterised in that there is a spacing (F) of more than 25 mm between the greatest radial extent (A) of the ejector member (33, 37, 42, 52, 54, 55, 56, 58, 59, 61, 63) and the hopper wall (13), in which the outlet apertures (14) are provided.

13. Centrifugal fertiliser broadcaster according to one or more of the preceding claims, characterised in that the ejector member (33, 37, 42, 52, 54, 55, 58, 56, 59, 61, 63) is secured on the drive shaft (10) by means of an overload prevention means.

14. Centrifugal fertiliser broadcaster according to one or more of the preceding claims, characterised in that the ejector member (33, 37, 42, 52, 54, 55, 56, 58, 59, 61, 63) is disposed beneath the distributing member (20, 31, 35, 40).

15. Centrifugal fertiliser broadcaster according to one or more of the preceding claims, characterised in that the ejector member (33, 37, 42, 52, 54, 55, 56, 58, 59, 61, 63) is disposed on the drive shaft (10) so as to be resiliently yieldable upwardly and/or in opposition to the direction of rotation (50, 50').

16. Centrifugal fertiliser broadcaster according to one or more of the preceding claims, characterised in that the ejector member (33, 37, 42, 52, 54, 55, 56, 58, 59, 61, 63) is formed from steel, preferably from a high-tensile and/or stainless steel, preferably provided with an additional reinforcement (51).

17. Centrifugal fertiliser broadcaster according to one or more of the preceding claims, characterised in that the distributing member (20, 31, 35, 40) itself is resilient.

18. Centrifugal fertiliser broadcaster according to one or more of the preceding claims, characterised in that the distributing member (20, 31, 35, 40) is formed as a plastics material component part.

19. Centrifugal fertiliser broadcaster according to one or more of the preceding claims, characterised in that a spring (25), formed from rubber for example, is disposed above the distributing member (20, 31, 35, 40).

20. Centrifugal fertiliser broadcaster according to one or more of the preceding claims, characterised in that a spacer tube (26) is provided internally of the rubber spring (25).

21. Centrifugal fertiliser broadcaster according to one or more of the preceding claims, characterised in that the ejector member (33, 37, 42, 52, 54, 55, 56, 58, 59, 61, 63) is interchangeably disposed on the drive shaft (10).

22. Centrifugal fertiliser broadcaster according to one or more of the preceding claims, characterised in that the distributing member (35, 40) is provided, on its underside, with a recessed groove (36, 43), in which the ejector member (33, 37, 42, 52, 54, 55, 56, 58, 59, 61, 63) engages.

23. Centrifugal fertiliser broadcaster according to one or more of the preceding claims, characterised in that the distributing member (20, 31, 35, 40) is non-rotatably connected to the respective drive shaft (10).

24. Centrifugal fertiliser broadcaster according to one or more of the preceding claims, characterised in that the ejector member (33, 37, 42, 52, 54, 55, 56, 58, 59, 61, 63) is connected to the drive shaft (10) in a non-rotatable manner, but preferably with an overload prevention means.

25. Centrifugal fertiliser broadcaster according to one or more of the preceding claims, characterised in that the ejector member (37, 56, 58, 59, 61) protrudes unilaterally beyond the greatest extent (A) of the distributing member (20, 31, 35, 40).

26. Centrifugal fertiliser broadcaster according to one or more of the preceding claims, characterised in that the ejector member (42, 52, 54, 55) protrudes beyond the distributing member (40) bilaterally on diametrically opposed sides of the distributing member (20) with small spacings (E).

27. Centrifugal fertiliser broadcaster according to one or more of the preceding claims, characterised in that the ejector member (37, 52, 54, 55, 56) is provided horizontally and at right angles relative to the drive shaft (10) in its region protruding beyond the distributing member (35, 40).

28. Centrifugal fertiliser broadcaster according to one or more of the preceding claims, characterised in that the region (A) of the ejector member (37, 42, 59, 61, 63) protruding beyond the greatest region (A) of the distributing member (35, 40) is bent inclinedly upwardly and/or downwardly.

29. Centrifugal fertiliser broadcaster according to one or more of the preceding claims, characterised in that the ejector member (42, 63) is bent downwardly on one side and bent upwardly on the other side.

30. Centrifugal fertiliser broadcaster according to one or more of the preceding claims, characterised in that the ejector member (63) has two ejector fingers (64, 65, 66, 67) on each side protruding beyond the distributing member (40), one finger (64, 65) being bent upwardly and the other finger (66, 67) being bent downwardly on each side.

31. Centrifugal fertiliser broadcaster according to one or more of the preceding claims, characterised in that the fingers (64, 65), which lie exactly opposite each other on the longer side, are jointly bent upwardly or the fingers (66, 67) are jointly bent downwardly.

32. Centrifugal fertiliser broadcaster according to one or more of the preceding claims, characterised in that all of the ejector members (33, 37, 42, 52, 54, 55, 56, 58, 59, 61, 63) have identical configurations.

33. Centrifugal fertiliser broadcaster according to one or more of the preceding claims, characterised in that the two ends (72) of the ejector member (71) point downwardly.

34. Centrifugal fertiliser broadcaster according to one or more of the preceding claims, characterised in that the through-apertures (12), through which the drive shafts (10) are guided for driving the distributing members (20, 31, 35, 40), have a substantially smaller diameter than the distributing members (20, 31, 35, 40) in respect of their greatest extent (A).

35. Centrifugal fertiliser broadcaster according to one or more of the preceding claims, characterised in that the ejector members (33, 37, 42, 52, 54, 55, 56, 58, 59, 61, 63) and/or distributing members (20, 31, 35, 40) are disposed on their respective drive shaft (10) in an easily interchangeable manner.

36. Centrifugal fertiliser broadcaster according to one or more of the preceding claims, characterised in that the base plates (11) are disposed internally of the hopper (2) in an easily detachable manner and are disposed so as to be upwardly removable.

37. Centrifugal fertiliser broadcaster according to one or more of the preceding claims, characterised in that shutters (15) are disposed in front of the outlet apertures (14), and a displacement and/or fracturing element (30) is disposed on the side of the shutters facing the outlet apertures (14) and the hopper interior in the region of the smallest aperture, said element being situated on a level with the ejector member (33, 37, 42, 52, 54, 55, 56, 58, 59, 61, 63) and/or on the greatest extent of the distributing member (20, 31, 35, 40).

38. Centrifugal fertiliser broadcaster according to one or more of the preceding claims, characterised in that the drive shaft is formed by a shaft portion (10), which is mounted upon the centrifugal disc drive shaft (7) and is guided through the hopper base (11), and the drive shaft is provided on its upper surface with the distributing member (20, 31, 35, 40) and/or ejector member (33, 37, 42, 52, 54, 55, 56, 58, 59, 61, 63).

39. Centrifugal fertiliser broadcaster according to one or more of the preceding claims, characterised in that the extension member (10) has an overload prevention means above the hopper base (11).

40. Centrifugal fertiliser broadcaster according to one or more of the preceding claims, characterised in that the overload prevention means is a horizontally extending groove (43), which is provided with inclined walls (44) and in which the ejector member (42, 52, 54, 55, 56, 58, 59, 61, 63), formed from flat material, engages, in that the distributing member (20, 31, 35, 40) is deposited onto the shaft (10) above the ejector member (33, 37, 42, 52, 54, 55, 56, 58, 59, 61, 63), and in that a spring, for example a rubber spring (25), is situated above the distributing member (20, 31, 35, 40).

41. Centrifugal fertiliser broadcaster according to one or more of the preceding claims, characterised in that the ejector member (33) is integrally formed with the distributing member (31).

42. Centrifugal fertiliser broadcaster according to one or more of the preceding claims, characterised in that the ejector member (33) is mounted from above upon the upper face of the distributing member (31), more especially upon the conical face of the distributing member (31), which face extends inclinedly downwardly.

43. Centrifugal fertiliser broadcaster according to one or more of the preceding claims, characterised in that the fingers (48, 49, 64, 65, 66, 67) of the ejector member (42, 63) are bent in such a manner that one finger (49, 66, 67) is situated above the displacement element (30) and the other finger is situated beneath said element.

44. Centrifugal fertiliser broadcaster according to one or more of the preceding claims, characterised in that variously configured ejector members (33, 37, 42, 52, 54, 55, 56, 58, 59, 61, 63) and/or distributing members (20, 31, 35, 40) are provided and interchangeable with one another.

45. Centrifugal fertiliser broadcaster according to one or more of the preceding claims, characterised in that the agitating and distributing members are disposed in the hopper above the base thereof.

46. Centrifugal fertiliser broadcaster according to one or more of the preceding claims, characterised in that the gap (73) between the wall (13), in which the outlet aperture (14) is provided, and the distributing member (40) has a funnel-like or wedge-shaped configuration.

47. Centrifugal fertiliser broadcaster according to one or more of the preceding claims, characterised in that substantially only the outermost broadside portions (72') of the ejector fingers (72) protrude beyond the outer, lower configuration of the distributing member (40).

## Revendications

1. Epandeur centrifuge d'engrais comprenant un réservoir et au moins deux disques d'épandage, rotatifs, recevant l'engrais à distribuer contenu dans le réservoir par des organes agitateurs et distributeurs, rotatifs, logés dans la partie inférieure du réservoir, à travers des orifices susceptibles d'être ouverts ou fermés, prévus de préférence dans les parois inclinées ou montantes du réservoir, au-dessus du fond du réservoir, les organes agitateurs et distributeurs étant entraînés directement à la même vitesse de rotation que les disques d'épandage par des axes d'entraînement traversant le fond du réservoir, et ces organes se composant d'organes d'alimentation (20, 31, 35, 40) ayant au moins sensiblement une symétrie de rotation, les organes agitateurs et distributeurs ayant une forme au moins sensiblement conique ou tronconique, le plus grand diamètre (A) d'un organe d'alimentation (20, 31, 35, 40) correspondant à sa face inférieure, l'organe d'alimentation (20, 31, 35, 40) étant dépassé à proximité de son plus grand diamètre (A) par au moins un élément éjecteur (33, 37, 42, 52, 54, 55, 56, 58, 59, 61, 63), caractérisé en ce que l'organe éjecteur (33, 37, 42, 52, 54, 55, 56, 58, 59, 61, 63), ne dépasse pas de l'organe d'alimentation (20, 31, 35, 40) au niveau de son plus grand diamètre (A) de plus de 15 mm et en ce qu'entre la plus grande extension radiale (A) de l'organe distributeur (20, 31, 35, 40) et la paroi du réservoir 13 munie des orifices (14) il y a une distance (D) qui ne dépasse pas 40 mm.

2. Epandeur centrifuge d'engrais selon la revendication 1, caractérisé en ce que l'organe d'alimentation (20, 31, 35, 40) est muni sur sa face inférieure d'un éjecteur (33,37,42,52,54,55,56,58,59,61,63,71).

3. Epandeur centrifuge d'engrais selon une ou plusieurs des revendications précédentes, caractérisé en ce que les organes agitateurs et distributeurs (18) sont constitués par des organes d'alimentation (20, 31, 35, 40) au moins sensiblement symétriques en rotation, dont le plus grand diamètre (A) se trouve chaque fois à proximité et/ou au niveau de la zone inférieure et/ou de la zone la plus basse et/ou de la petite et/ou de la plus petite section d'ouverture des orifices de sortie respectifs (14, 14'), le volume d'engrais, c'est-à-dire la zone inférieure du réservoir en dessous de ce plus grand diamètre de l'organe distributeur (20, 31, 35, 40) comportant des pièces rotatives ayant un diamètre (B) beaucoup plus petit (de préférence supérieur à la moitié du plus grand diamètre (A) de l'organe d'alimentation (29, 31, 35, 40)), que les organes d'alimentation (29, 31, 35, 40) au niveau de sa plus grande extension (A).

4. Epandeur centrifuge d'engrais selon une ou plusieurs des revendications précédentes, caractérisé en ce que dans le volume d'engrais, c'est-à-dire dans la zone la plus basse du réservoir, au-dessus du plus grand diamètre (A) de l'organe d'alimentation (20, 31, 35, 40), il y a des pièces rotatives et cela de façon que l'axe d'entraînement (10), qui pénètre par en dessous dans le fond (12) du réservoir et entraîne les organes agitateurs et distributeurs (18, 20, 31, 35, 40), présente un diamètre beaucoup plus petit (B) de préférence non supérieur à la moitié du plus grand diamètre (A) de l'organe d'alimentation (29, 31,35, 40) que l'organe d'alimentation correspondant (20, 31, 35, 40) au niveau de sa plus grande dimension (A).

5. Epandeur centrifuge d'engrais selon une ou plusieurs des revendications précédentes, caractérisé en ce que l'organe d'alimentation respectif (20, 31,35, 40) présente une surface extérieure (23) au moins pratiquement totalement lisse ou ne comportant que de très petits bossages (32).

6. Epandeur centrifuge d'engrais selon une ou plusieurs des revendications précédentes, caractérisé en ce que l'organe d'alimentation (20, 31, 35, 40) présente une surface extérieure lisse (23).

7. Epandeur centrifuge d'engrais selon une ou plusieurs des revendications précédentes, caractérisé en ce que la longueur (E) de l'élément éjecteur (71) correspond sensiblement au plus grand diamètre (A) de l'organe d'alimentation (40).

8. Epandeur centrifuge d'engrais selon une ou plusieurs des revendications précédentes, caractérisé en ce que la longueur de l'élément éjecteur est inférieure au plus grand diamètre de l'organe d'alimentation.

9. Epandeur centrifuge d'engrais selon une ou plusieurs des revendications précédentes, caractérisé en ce que l'organe d'alimentation (20, 31, 35, 40) présente une forme conique ou tronconique dont la pointe (22) est dirigée vers le haut.

10. Epandeur centrifuge d'engrais selon une ou plusieurs des revendications précédentes, caractérisé en ce que la surface extérieure (23) de l'organe d'alimentation (20, 31, 35, 40) conique a un angle au sommet, ouvert vers le bas et qui correspond à environ 60-120° de préférence 90°.

11. Epandeur centrifuge d'engrais selon une ou plusieurs des revendications précédentes, caractérisé par une distance verticale considérable entre l'organe d'alimentation (20, 31, 35, 40) au niveau de sa plus grande dimension radiale (A) et le fond (11) du réservoir, cette distance (C) étant égale à au moins 8 mm et de préférence supérieure à 10 mm.

12. Epandeur centrifuge d'engrais selon une ou plusieurs des revendications précédentes, caractérisé en ce qu'entre la plus grande dimension radiale (A) de l'éjecteur (33,37,42,52,54,55,56,58,58,61,63) et la paroi (13) du réservoir dans laquelle se trouvent les orifices de sortie (14) il y a une distance (F) supérieure à 25 mm.

13. Epandeur centrifuge d'engrais selon une ou plusieurs des revendications précédentes, caractérisé en ce que l'éjecteur (33,37,342,52,54,55,58,56,59,61,63) est fixé à l'aide d'une sécurité de surcharge sur l'axe d'entraînement (10).

14. Epandeur centrifuge d'engrais selon une ou plusieurs des revendications précédentes, caractérisé en ce que l'éjecteur (33,37,42,52,54,55,56,58,59,61,63) est placé sous l'organe d'alimentation (20,31,35, 40).

15. Epandeur centrifuge d'engrais selon une ou plusieurs des revendications précédentes, caractérisé en ce que l'éjecteur (33,37,42,52,54,55,56,58,59,61,63) est monté sur l'axe d'entraînement (10) de manière à pouvoir s'échapper élastiquement vers le haut et/ou dans la direction opposée à la direction de rotation (50, 50').

16. Epandeur centrifuge d'engrais selon une ou plusieurs des revendications précédentes, caractérisé en ce que l'éjecteur (33,37,42,52,54,55,56,58,59,61,63) est en acier et de préférence en acier très résistant et/ou inoxydable avec de préférence une surcharge de renforcement (51).

17. Epandeur centrifuge d'engrais selon une ou plusieurs des revendications précédentes, caractérisé en ce que l'organe d'alimentation (20, 31, 35, 40) est lui-même élastique.

18. Epandeur centrifuge d'èngrais selon une ou plusieurs des revendications précédentes, caractérisé en ce que l'organe d'alimentation (20, 31, 35, 40) est une pièce en matière plastique.

19. Epandeur centrifuge d'engrais selon une ou plusieurs des revendications précédentes, caractérisé en ce qu'au-dessus de l'organe d'alimentation (20, 31,35, 40) il y a un ressort (25) par exemple en caoutchouc.

20. Epandeur centrifuge d'engrais selon une ou plusieurs des revendications précédentes, caractérisé par une douille d'écartement (26) prévue dans le ressort en caoutchouc (25).

21. Epandeur centrifuge d'engrais selon une ou plusieurs des revendications précédentes, caractérisé en ce que l'éjecteur (33,37,42,52,54,55,56,58,59,61,63) est monté interchangeable sur l'axe d'entraînement (10).

22. Epandeur centrifuge d'engrais selon une ou plusieurs des revendications précédentes, caractérisé en ce que l'organe d'alimentation (35, 40) comporte une rainure (36, 43) dans sa surface inférieure, rainure dans laquelle se loge l'éjecteur (33,37,42,52,54,55,56,58,59,61,63).

23. Epandeur centrifuge d'engrais selon une ou plusieurs des revendications précédentes, caractérisé en ce que l'organe d'alimentation (20, 31, 35, 40) est relié solidairement en rotation à l'axe d'entraînement (10).

24. Epandeur centrifuge d'engrais selon une ou plusieurs des revendications précédentes, caractérisé en ce que l'éjecteur (33,37,42,52,54,55,56,58,59,61,63) est monté solidairement en rotation sur l'axe d'entraînement (10) avec toutefois une sécurité de surcharge.

25. Epandeur centrifuge d'engrais selon une ou plusieurs des revendications précédentes, caractérisé en ce que l'éjecteur (37, 56, 58, 59, 61) dépasse d'un côté par rapport à la plus grande dimension (A) de l'organe d'alimentation (20, 31,35, 40).

26. Epandeur centrifuge d'engrais selon une ou plusieurs des revendications précédentes, caractérisé en ce que l'éjecteur (42, 52, 54, 55) dépasse de l'organe d'alimentation (40) des deux côtés en des points diamétralement opposés de l'organe d'alimentation (20) sur une petite distance (E).

27. Epandeur centrifuge d'engrais selon une ou plusieurs des revendications précédentes, caractérisé en ce que l'éjecteur (37, 52, 54, 55, 56) est horizontal perpendiculaire à l'axe d'entraînement (10) dans sa zone qui dépasse de l'organe d'alimentation (35, 40,).

28. Epandeur centrifuge d'engrais selon une ou plusieurs des revendications précédentes, caractérisé en ce que la zone de l'éjecteur (37, 42, 59, 61, 63) dépasse de la plus grande zone (A) de l'organe d'alimentation (35, 40) en étant recourbé vers le haut et/ou vers le bas.

29. Epandeur centrifuge d'engrais selon une ou plusieurs des revendications précédentes, caractérisé en ce que l'éjecteur (42, 63) est recourbé vers le bas sur un côté et vers le haut de l'autre côté.

30. Epandeur centrifuge d'engrais selon une ou plusieurs des revendications précédentes, caractérisé en ce que l'éjecteur (63) comporte de chaque côté qui dépasse de l'organe d'alimentation (40), deux doigts d'éjecteur (64, 65, 66, 67) et de chaque côté l'un des doigts (64, 65) est tourné vers le haut et l'autre côté (66, 67) est recourbé vers le bas.

31. Epandeur centrifuge d'engrais selon une ou plusieurs des revendications précédentes, caractérisé en ce que les doigts (64, 65) opposés suivant les grands côtés sont recourbés en commun vers le haut et les doigts (66, 67) également opposés suivant les grands côtés sont recourbés vers le bas.

32. Epandeur centrifuge d'engrais selon une ou plusieurs des revendications précédentes, caractérisé en ce que tous les éjecteurs (33,37,342,52,54,55,56,58,59,61,63) sont identiques.

33. Epandeur centrifuge d'engrais selon une ou plusieurs des revendications précédentes, caractérisé en ce que les deux extrémités (72) de l'éjecteur (71) sont tournées vers le bas.

34. Epandeur centrifuge d'engrais selon une ou plusieurs des revendications précédentes, caractérisé en ce que les orifices de passage (12) traversés par les axes d'entraînement (6) pour entraîner les organes d'alimentation (20, 31,35, 40) ont un diamètre considérablement plus petit que les organes d'alimentation (20, 31, 35, 40) dans leur plus grande dimension (A).

35. Epandeur centrifuge d'engrais selon une ou plusieurs des revendications précédentes, caractérisé en ce que les éjecteurs (33,37,42,52,54,55,56,58,59,61,63) et/ou les organes d'alimentation (20, 31, 35, 40) sont facilement interchangeables sur leur axe d'entraînement respectif (10).

36. Epandeur centrifuge d'engrais selon une ou plusieurs des revendications précédentes, caractérisé en ce que les plaques de fond (11) sont montées facilement amovibles dans le réservoir (2) et peuvent s'extraire par le haut.

37. Epandeur centrifuge d'engrais selon une ou plusieurs des revendications précédentes, caractérisé en ce que des tiroirs d'obturation (15) sont prévus devant les orifices de sortie (14), et sur leurs côtés tournés vers le volume intérieur du réservoir et vers les orifices de sortie (14), au niveau de la plus petite ouverture, il y a un élément de refoulement et/ou de rupture (30) qui se trouve au niveau de l'éjecteur (33,37,342,52,54,55,56,58,59,61,63) et/ou de la plus grande extension de l'organe d'alimentation (20, 31, 35, 40).

38. Epandeur centrifuge d'engrais selon une ou plusieurs des revendications précédentes, caractérisé en ce que l'axe d'entraînement est formé par un élément d'axe (10) monté sur l'axe (7) d'entraînement des disques d'épandage, cet élément d'axe traversant le fond (11) du réservoir et portant à son extrémité supérieure, l'organe d'alimentation (20,31,35,40) et/ou l'éjecteur (33,37,42,52, 54,55,56,58,59,61,63).

39. Epandeur centrifuge d'engrais selon une ou plusieurs des revendications précédentes, caractérisé en ce que la pièce de prolongement (10) présente au-dessus du fond (11) du réservoir une sécurité de surcharge.

40. Epandeur centrifuge d'engrais selon une ou plusieurs des revendications précédentes, caractérisé en ce que la sécurité de surcharge est une rainure horizontale (43) à parois (44) inclinées dans lesquelles se logent les éjecteurs (42,52,54,55,56,58,59,61,63), en un matériau plat et sur l'axe (14) au-dessus de l'éjecteur (33,37,42,52,54,55,56,58,59,61,63), l'organe d'alimentation (20,31,35,40) est décalé et en ce qu'au-dessus de l'organe d'alimentation (20,31,35,40) il y a un ressort par exemple un ressort en caoutchouc (25).

41. Epandeur centrifuge d'engrais selon une ou plusieurs des revendications précédentes, caractérisé en ce que l'éjecteur (33) fait une seule pièce avec l'organe d'alimentation (31).

42. Epandeur centrifuge d'engrais selon une ou plusieurs des revendications précédentes, caractérisé en ce que l'éjecteur (33) est rapporté par le dessus sur la surface supérieur de l'organe d'alimentation (31), notamment sur la surface conique en biais vers le bas de l'organe d'alimentation (31).

43. Epandeur centrifuge d'engrais selon une ou plusieurs des revendications précédentes, caractérisé en ce que les doigts (48, 49, 64, 65, 66, 67) de l'éjecteur (42, 63) sont recourbés pour qu'un doigt (49, 66, 67) se trouve au-dessus de l'élément de refoulement (30) et que l'autre doigt se trouve en dessous de cet élément de refoulement (30).

44. Epandeur centrifuge d'engrais selon une ou plusieurs des revendications précédentes, caractérisé en ce que les éjecteurs (33,37,42,52,54,55,56,58,59,61,63), réalisés avec des formes différentes et/ou les organes d'alimentation (20,31,35,40) sont interchangeables.

45. Epandeur centrifuge d'engrais selon une ou plusieurs des revendications précédentes, caractérisé en ce que les organes agitateurs et distributeurs sont prévus au-dessus du fond du réservoir.

46. Epandeur centrifuge d'engrais selon une ou plusieurs des revendications précédentes, caractérisé en ce que l'intervalle (73) entre la paroi (13) dans laquelle il y a l'orifice de sortie (14) et l'organe d'alimentation (40), est en forme de trémie ou de coin.

47. Epandeur centrifuge d'engrais selon une ou plusieurs des revendications précédentes, caractérisé en ce que principalement seulement les parties latérales larges (72'), extérieures des doigts éjecteurs (72) dépassent du contour extérieur de l'organe d'alimentation (40).
